(19) 

Europäisches Patentamt  
European Patent Office  
Office européen des brevets

(11) **EP 4 637 043 A1**

(12) **EUROPEAN PATENT APPLICATION**
published in accordance with Art. 153(4) EPC

(43) Date of publication:
**22.10.2025 Bulletin 2025/43**

(21) Application number: **23903723.7**

(22) Date of filing: **23.10.2023**

(51) International Patent Classification (IPC):
*H04B 7/06* (2006.01)  *H04B 7/08* (2006.01)
*H04B 7/0408* (2017.01)  *H04W 24/10* (2009.01)
*H04N 21/436* (2011.01)  *H04N 21/4363* (2011.01)
*H04W 84/12* (2009.01)  *H04W 16/28* (2009.01)

(52) Cooperative Patent Classification (CPC):
**H04B 7/0408; H04B 7/06; H04B 7/08;**
**H04N 21/436; H04N 21/4363; H04W 16/28;**
**H04W 24/10; H04W 84/12**

(86) International application number:
**PCT/KR2023/016476**

(87) International publication number:
**WO 2024/128519 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **13.12.2022 KR 20220173532**
**13.03.2023 KR 20230032713**

(71) Applicant: **LG Electronics Inc.**
**Yeongdeungpo-gu**
**Seoul 07336 (KR)**

(72) Inventor: **KWON, Byunguk**
**Seoul 06772 (KR)**

(74) Representative: **Vossius & Partner**
**Patentanwälte Rechtsanwälte mbB**
**Siebertstrasse 3**
**81675 München (DE)**

(54) **WIRELESS MEDIA DEVICE AND IMAGE DISPLAY DEVICE COMPRISING SAME**

(57)     A wireless media device according to an embodiment of the present disclosure includes: a signal processing device configured to process an image signal or an audio signal; and a transceiver device configured to wirelessly transmit a signal from the signal processing device to an external display device, and the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering. Accordingly, beam tracking can be performed rapidly based on blockage detection.

FIG. 13

**Description**

## BACKGROUND

### 1. Field

. The present disclosure relates to an image display apparatus, and more particularly, to an image display apparatus capable of rapidly performing beam tracking based on blockage detection.

### 2. Description of the Related Art

. Image display apparatuses display images through displays.

. Meanwhile, sound can be output through an audio output device in addition to an image through image display apparatuses.

. Meanwhile, in order to output image on the displays of the image display apparatuses, a signal processing device performs image signal processing and the like.

. Recently, for ease of use, a method of separating a display and a signal processing device in an image display apparatus and performing media transmission between the display and the signal processing device by a wireless communication method rather than a wired communication method has been studied.

. On the other hand, when a blockage occurs between the display and the signal processing device, there is a disadvantage that media transmission is not smooth.

. Furthermore, when beam tracking is performed by a request when necessary, there is a disadvantage in that it is slow to cope with a sudden change in a wireless situation.

## SUMMARY

. An object of the present disclosure is to provide a wireless media device, and an image display apparatus including the same, which are capable of rapidly performing beam tracking based on blockage detection.

. Another object of the present disclosure is to provide a wireless media device, and an image display apparatus including the same, which are capable of stably performing media transmission even when a blockage occurs.

. Yet another object of the present disclosure is to provide a wireless media device, and an image display apparatus capable of rapidly performing beam tracking by using a beam candidate group.

. In accordance with an aspect of the present disclosure, the above and other objects can be accomplished by the provision of a wireless media device including: a signal processing device configured to process an image signal or an audio signal; and a transceiver device configured to wirelessly transmit a signal from the signal processing device to an external display device, wherein the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering.

. Meanwhile, the transceiver device can be configured to perform the beam tracking in response to the difference between the result of the first filtering and the result of the second filtering being equal to or greater than a set value.

. Meanwhile, the transceiver device can be configured to select a beam candidate group based on the link quality between the wireless media device and the display device, and manage the beam candidate group, and perform the beam tracking in response to the difference between the result of the first filtering and the result of the second filtering being equal to or greater than the set value.

. Meanwhile, in response to the difference between the result of the first filtering and the result of the second filtering being equal to or greater than the set value, the transceiver device can be configured to determine that there is a blockage between the wireless media device and the display device, and perform a beam change through the beam tracking.

. Meanwhile, the transceiver device can be configured to use a current beam as it is without performing the beam tracking in response to the difference between the result of the first filtering and the result of the second filtering being less than the set value.

. Meanwhile, the transceiver device can be configured to perform each of the first filtering based on a first coefficient and the second filtering based on a second coefficient less than the first coefficient.

. Meanwhile, in response to the difference between the result of the first filtering and the result of the second filtering being equal to or greater than the set value, the transceiver device can be configured to change a line of sight (LOS) beam to a beam in an upward direction of the LOS beam through the beam tracking.

. Meanwhile, in response to the difference between the result of the first filtering and the result of the second filtering being equal to or greater than the set value, the transceiver device can be configured to determine that the blockage occurs, and in response to a result level of the second filtering being increased stepwise and the difference between the result of the first filtering and the result of the second filtering being changed to be less than the set value after determining that there is the blockage, determine that the blockage is cancelled.

. Meanwhile, the transceiver device can be configured to perform a beam change through the beam tracking between the blockage determination time point and the blockage cancellation determination time point, and use a beam before the bema change again after the blockage cancellation determination time point.

. Meanwhile, the transceiver device can be configured to transmit a first signal based on a beam having a first shape in which a sector is sequentially changed during a first period, receive a second signal based on the beam having the first shape from the display device during a third period based on selection of the wireless media device of the display device during a second period, approve association with the display device based on network address information in the second signal during a fourth period, transmit a third signal based on a beam having a second shape at an angle less than that of the first shape during a fifth period, and transmit wireless media to the display device based on the beam having the second shape during a sixth period

. In accordance with another aspect of the present disclosure, the above and other objects can be accomplished by the provision of an image display apparatus including: a display device; and a wireless media device, wherein the wireless media device is configured to include: a signal processing device configured to process an image signal or an audio signal; and a transceiver device configured to wirelessly transmit a signal from the signal processing device to an external display device, wherein the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering.

EFFECTS OF THE DISCLOSURE

. In accordance with an aspect of the present disclosure, the above and other objects can be accomplished by the provision of a wireless media device including: a signal processing device configured to process an image signal or an audio signal; and a transceiver device configured to wirelessly transmit a signal from the signal processing device to an external display device, wherein the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering. Accordingly, the beam tracking can be performed rapidly based on the blockage detection. In particular, by changing a beam at the time of the blockage detection, stable media data transmission is enabled.

. Meanwhile, the transceiver device can be configured to perform the beam tracking in response to the difference between the result of the first filtering and the result of the second filtering being equal to or greater than a set value. Accordingly, the beam tracking can be performed rapidly based on the blockage detection.

. Meanwhile, the transceiver device can be configured to select a beam candidate group based on the link quality between the wireless media device and the display device, and manage the beam candidate group, and perform the beam tracking in response to the difference between the result of the first filtering and the result of the second filtering being equal to or greater than the set value. Accordingly, the beam tracking can be performed rapidly based on the blockage detection. Furthermore, the beam tracking can be rapidly performed by using a beam candidate group.

. Meanwhile, in response to the difference between the result of the first filtering and the result of the second filtering being equal to or greater than the set value, the transceiver device can be configured to determine that there is a blockage between the wireless media device and the display device, and perform a beam change through the beam tracking. Accordingly, the beam tracking can be performed rapidly based on the blockage detection.

. Meanwhile, the transceiver device can be configured to use a current beam as it is without performing the beam tracking in response to the difference between the result of the first filtering and the result of the second filtering being less than the set value. Accordingly, the stable media data transmission is enabled.

. Meanwhile, the transceiver device can be configured to perform each of the first filtering based on a first coefficient and the second filtering based on a second coefficient less than the first coefficient.

. Meanwhile, in response to the difference between the result of the first filtering and the result of the second filtering being equal to or greater than the set value, the transceiver device can be configured to change a line of sight (LOS) beam to a beam in an upward direction of the LOS beam through the beam tracking. Accordingly, the beam tracking can be performed rapidly based on the blockage detection. In particular, by changing a beam at the time of the blockage detection, stable media data transmission is enabled.

. Meanwhile, in response to the difference between the result of the first filtering and the result of the second filtering being equal to or greater than the set value, the transceiver device can be configured to determine that the blockage occurs, and in response to a result level of the second filtering being increased stepwise and the difference between the result of the first filtering and the result of the second filtering being changed to be less than the set value after determining that there is the blockage, determine that the blockage is cancelled. Accordingly, the stable media data transmission based on blockage detection cancellation is enabled.

. Meanwhile, the transceiver device can be configured to perform a beam change through the beam tracking between the blockage determination time point and the blockage cancellation determination time point, and use a beam before the bema change again after the blockage cancellation determination time point. Accordingly, the stable media data transmission based on blockage detection cancellation is enabled.

. Meanwhile, the transceiver device can be configured to transmit a first signal based on a beam having a first shape in which a sector is sequentially changed during a first period, receive a second signal based on the beam having the first shape from the display device during a third period based on selection of the wireless media device of the display device during a second period, approve association with the display device based on network address information in the second signal during a fourth period, transmit a third signal based on a beam having a second shape at an angle less than that of the first shape during a fifth period, and transmit wireless media to the display device based on the beam having the second shape during a sixth period. Accordingly, the stable media data transmission is enabled.

. In accordance with another aspect of the present disclosure, the above and other objects can be accomplished by the provision of an image display apparatus including: a display device; and a wireless media device, wherein the wireless media device is configured to include: a signal processing device configured to process an image signal or an audio signal; and a transceiver device configured to wirelessly transmit a signal from the signal processing device to an external display device, wherein the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering. Accordingly, the beam tracking can be performed rapidly based on the blockage detection. In particular, by changing a beam at the time of the blockage detection, stable media data transmission is enabled.

## BRIEF DESCRIPTION OF THE DRAWINGS

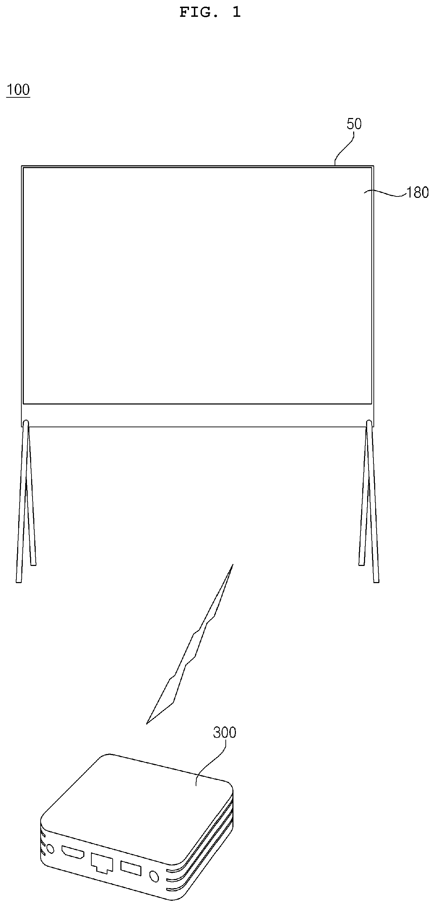

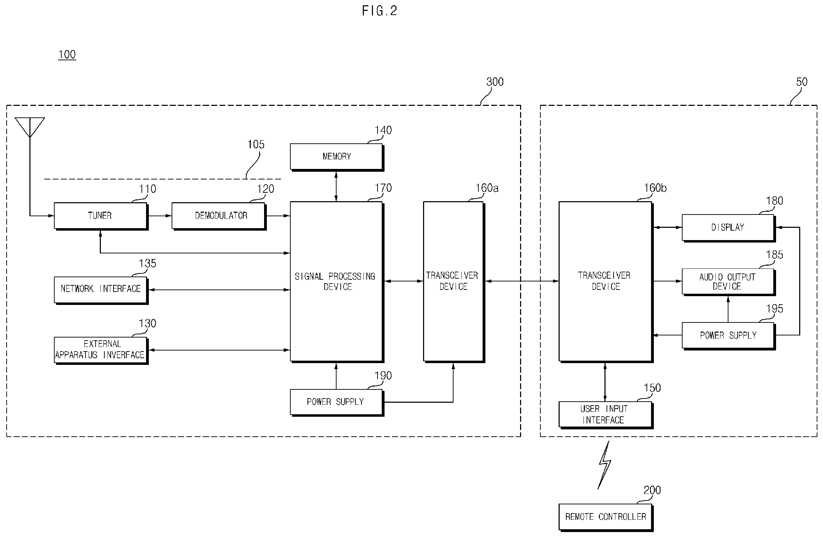

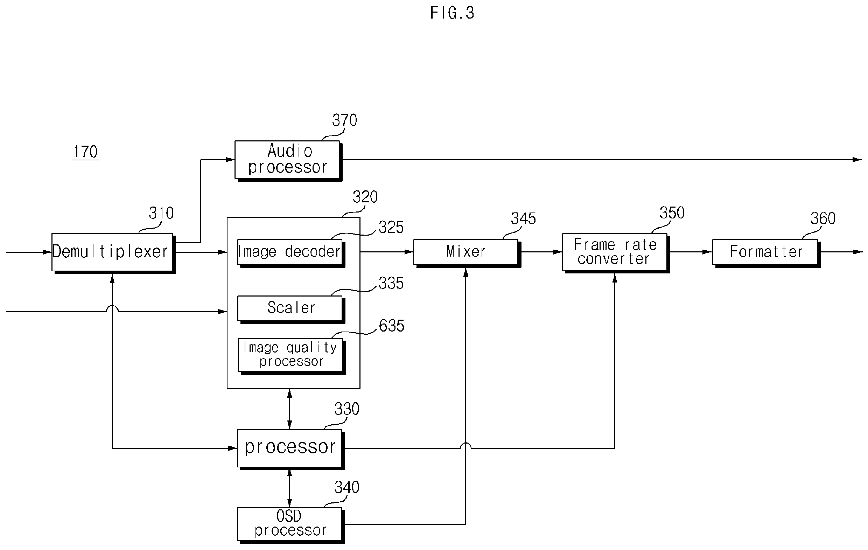

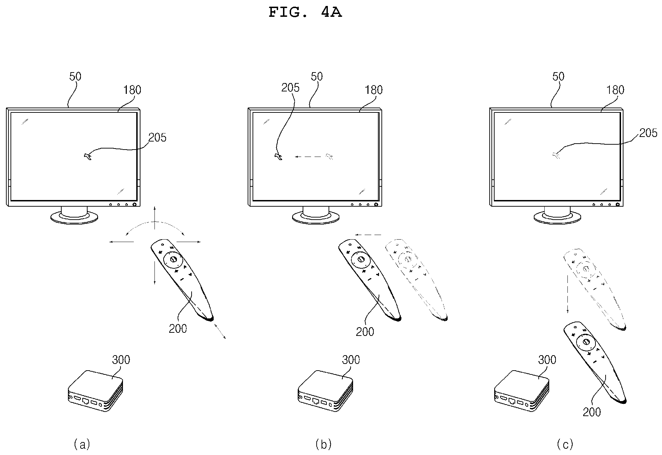

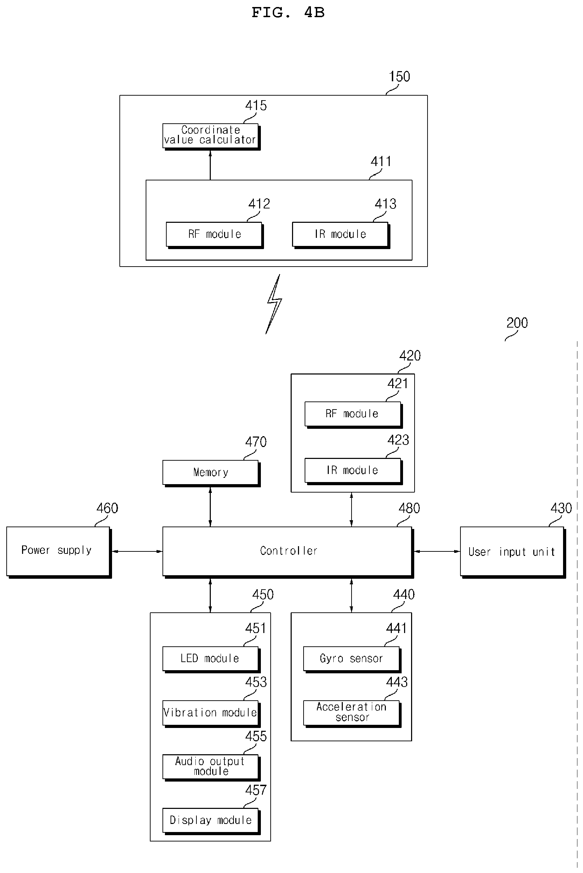

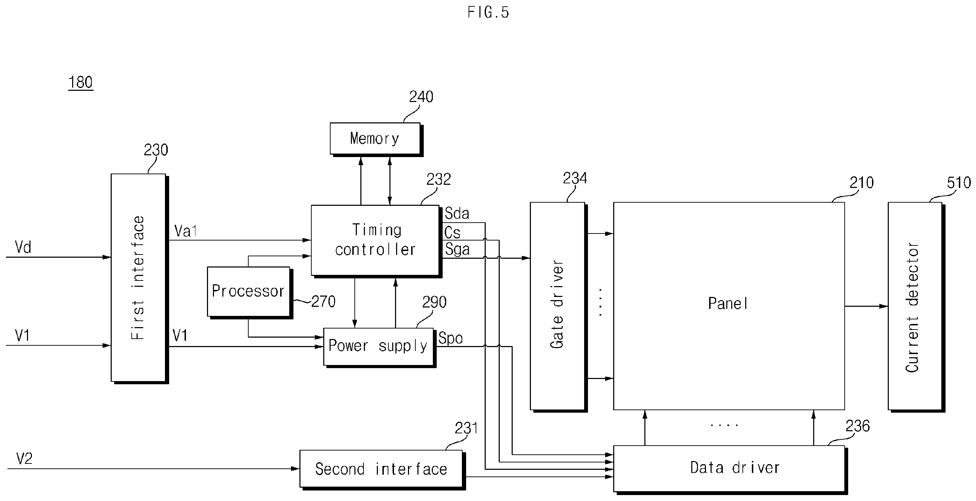

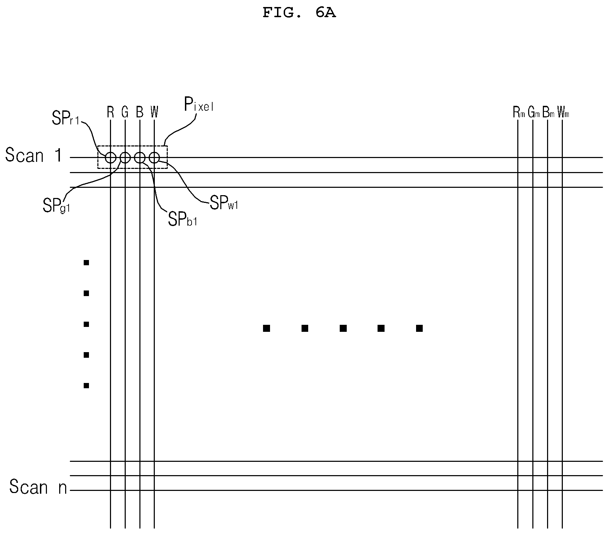

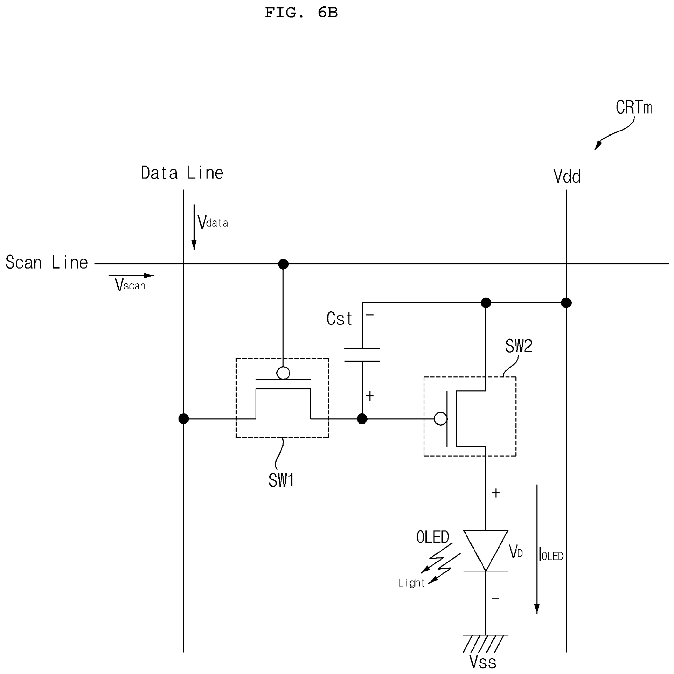

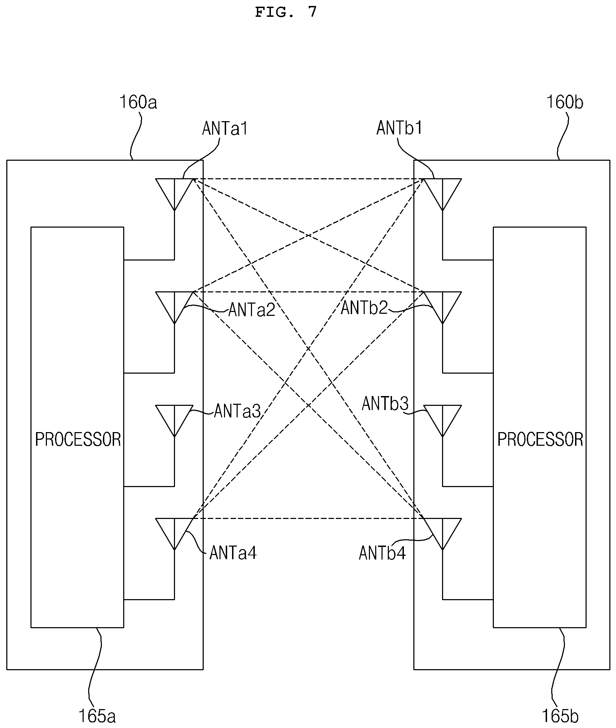

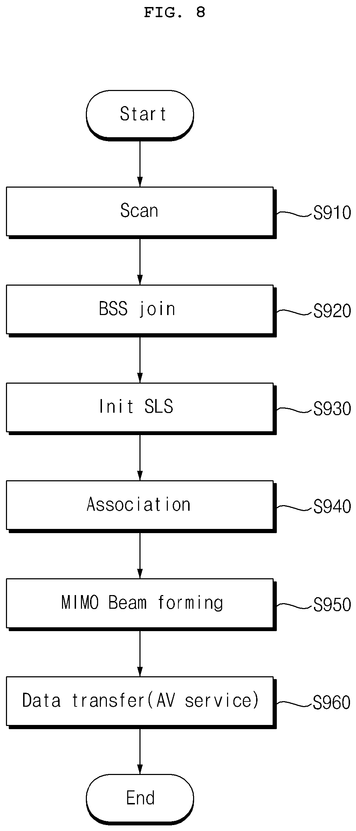

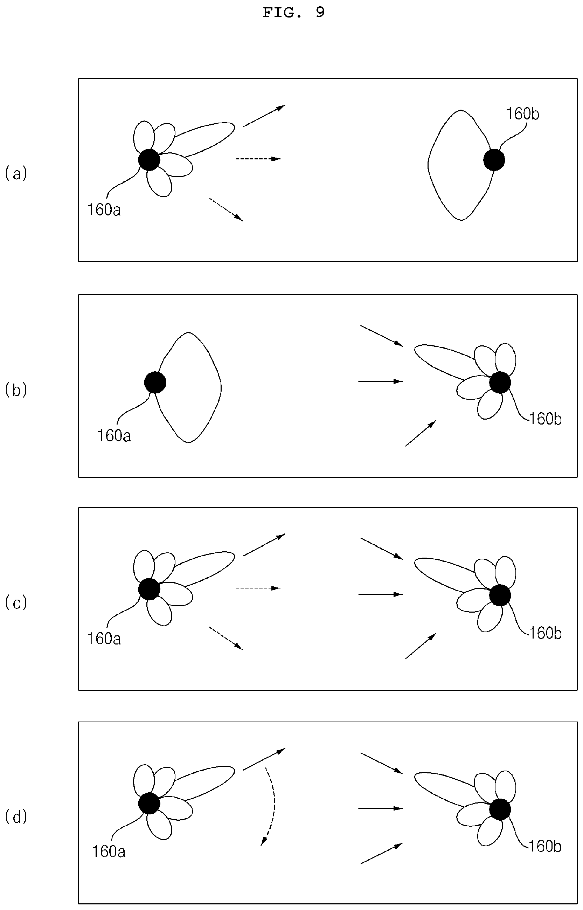

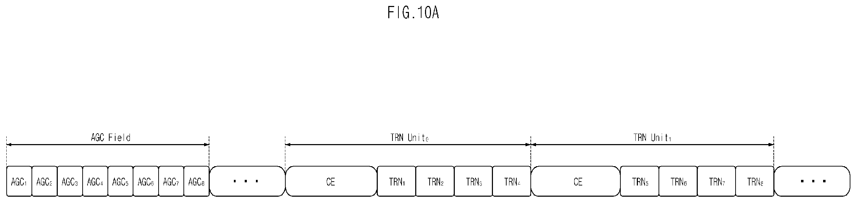

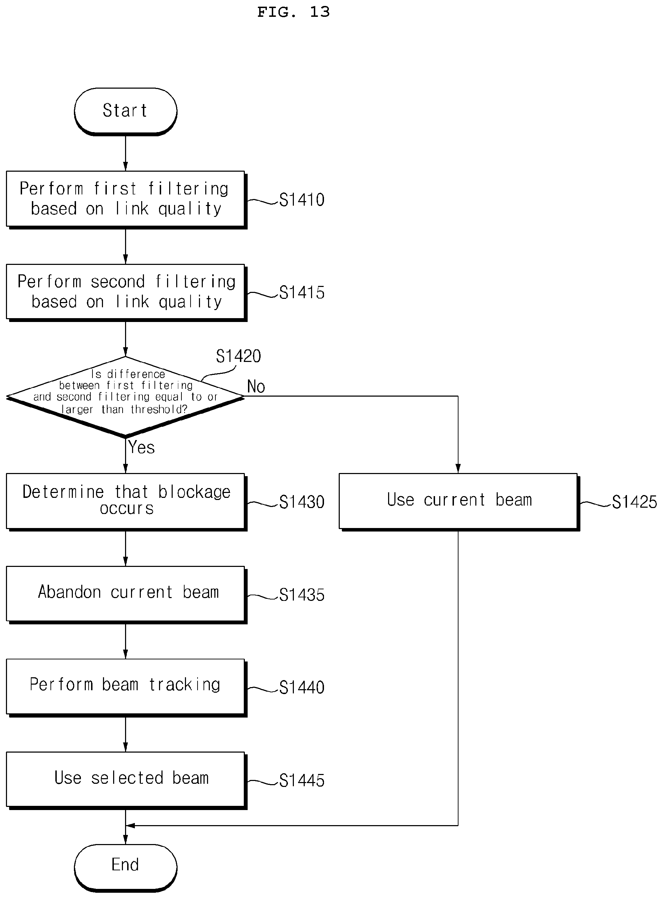

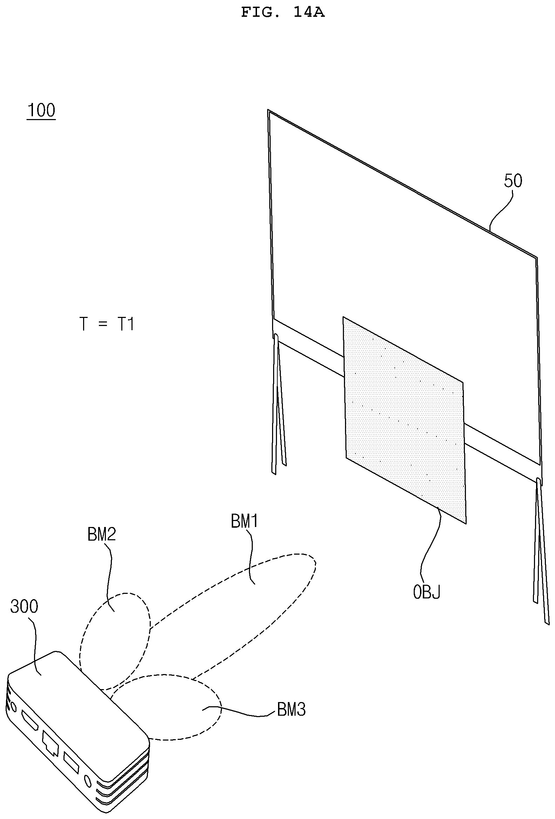

. FIG. 1 is a diagram showing an image display apparatus according to an embodiment of the present disclosure;
. FIG. 2 is an internal block diagram of an image display apparatus according to an embodiment of the present disclosure;
. FIG. 3 is an internal block diagram of a signal processing device of FIG. 2;
. FIG. 4A is a diagram showing a method of controlling a remote controller of FIG. 2;
. FIG. 4B is an internal block diagram of the remote controller of FIG. 2;
. FIG. 5 is an internal block diagram of a display of FIG. 2;
. FIGS. 6A and 6B are diagrams referred to in the description of an organic light emitting diode panel of FIG. 5;
. FIG. 7 is a diagram referred to in the description of a transceiver device of FIG. 2 and a second transceiver device;
. FIG. 8 is a flowchart illustrating an operation of an image display apparatus;
. FIG. 9 is a diagram referred to in the description of FIG. 8;
. FIGS. 10A to 12C are diagrams referred to in the description of an operation of a wireless media device related to the present disclosure;
. FIG. 13 is a flowchart illustrating an operation of a wireless media device according to an embodiment of the present disclosure; and
. FIGS. 14A to 16C are diagrams referred to in the description of FIG. 13.

DETAILED DESCRIPTION OF THE PREFERRED EMBODIMENTS

. Hereinafter, the present disclosure will be described in detail with reference to the accompanying drawings.

. Regarding constituent elements used in the following description, suffixes "module" and "unit" are given only in consideration of ease in the preparation of the specification, and do not have or serve as different meanings. Accordingly, the suffixes "module" and "unit" can be used interchangeably.

. FIG. 1 is a diagram showing an image display apparatus according to an embodiment of the present disclosure.

. Referring to FIG. 1, an image display apparatus 100 according to an embodiment of the present disclosure includes a display device 50 and a wireless media device 300.

. The wireless media device 300 and the display device 50 in the image display apparatus 100 according to an embodiment of the present disclosure are separated from each other and wirelessly transmit and receive media.

. Meanwhile, the wireless media device 300 in the image display apparatus 100 can wirelessly transmit an image signal or an audio signal to the display device 50 using a non-compression method.

. For example, the wireless media device 300 in the image display apparatus 100 can be configured to transmit an image signal or an audio signal to the display device 50 based on wireless communication based on the 802.11 ad/ay standard.

. When the wireless media device 300 transmits an uncompressed image signal or audio signal to the display device 50, the wireless media device 300 can be configured to transmit media data to the display device 50 using a frequency based on 60 GHz in order to secure a stable wireless bandwidth.

. Meanwhile, for wireless communication between the wireless media device 300 and the display device 50, beam tracking is performed.

. Meanwhile, when an object is located between the wireless media device 300 or the display device 50, media transmission is not smooth due to a blockage.

. Meanwhile, in a scheme of performing beam tracking by a request of the wireless media device 300 or the display device 50, there is a disadvantage in that it is slow to cope with a sudden change in a wireless situation, such as when an object is located between the wireless media devices 300 or the display device 50.

. Accordingly, the present disclosure proposes a method capable of rapidly performing beam tracking based on blockage detection.

. To this end, the wireless media device 300 according to the embodiment of the present disclosure performs, based on a link quality between the wireless media device 300 and the display device 50, each of a first filtering to react at a first speed and a second filtering to react at a second speed slower than the first speed, and performs beam tracking based on a difference between a result of the first filtering and a result of the second filtering. Accordingly, the beam tracking can be performed rapidly based on the blockage detection. In particular, by changing the beam at the time of the blockage detection, stable media data transmission is enabled.

. Meanwhile, the display device 50 according to the embodiment of the present disclosure performs, based on the link quality between the wireless media device 300 and the display device 50, each of a first filtering to react at a first speed and a second filtering to react at a second speed slower than the first speed, and performs beam tracking based on a difference between a result of the first filtering and a result of the second filtering. Accordingly, the beam tracking can be performed rapidly based on the blockage detection. In particular, by changing the beam at the time of the blockage detection, stable media data transmission is enabled.

. FIG. 2 is an internal block diagram of an image display apparatus according to an embodiment of the present disclosure.

. Referring to FIG. 2, the image display apparatus 100 according to an embodiment of the present disclosure includes the wireless media device 300 and the display device 50.

. The wireless media device 300 can include an image receiver 105, a memory 140, a power supply 190, a signal processing device 170, and a transceiver device 160a.

. The display device 50 can include a second transceiver device 160b, a user input interface 150, a display 180, an audio output device 185, and a power supply 195.

. The image receiver 105 can include a tuner 110, a demodulator 120, a network interface 135, and an external apparatus device 130.

. The tuner 110 selects an RF broadcast signal corresponding to a channel selected by a user or all pre-stored channels among radio frequency (RF) broadcast signals received through an antenna 50. In addition, the selected RF broadcast signal is converted into an intermediate frequency signal, a baseband image, or an audio signal.

. For example, if the selected RF broadcast signal is a digital broadcast signal, the digital broadcast signal is converted into a digital IF signal (DIF), and if the selected RF broadcast signal is an analog broadcast signal, the analog broadcast signal is converted into an analog baseband image or audio signal (CVBS/SIF). That is, the tuner 110 can process the digital broadcast signal or an analog broadcast signal. The analog baseband image or audio signal (CVBS/SIF) output from the tuner 110 can be directly input to the signal processing device 170.

. Meanwhile, the tuner 110 can include a plurality of tuners for receiving broadcast signals of a plurality of channels. Alternatively, a single tuner that simultaneously receives broadcast signals of a plurality of channels is also available.

. The demodulator 120 receives the converted digital IF signal DIF from the tuner 110 and performs a demodulation operation.

. The demodulator 120 can be configured to perform demodulation and channel decoding and then output a stream signal TS. At this time, the stream signal can be a multiplexed signal of an image signal, an audio signal, or a data signal.

. The stream signal output from the demodulator 120 can be input to the signal processing device 170. The signal processing device 170 performs demultiplexing, image/audio signal processing, and the like, and then outputs an image to the display 180 and outputs audio to the audio output device 185.

. The external apparatus interface 130 can be configured to transmit or receive data to and from a connected external apparatus (not shown). To this end, the external apparatus interface 130 can include an A/V input/output device (not shown) or a wireless communication unit (not shown).

. The external apparatus interface 130 can be connected in wired or wirelessly to an external apparatus, such as a digital versatile disk (DVD), a Blu ray, a game equipment, a camera, a camcorder, a computer (note book), a set-top box, and USB device, and can be configured to perform an input/output operation with an external apparatus.

. The A/V input and output device can be configured to receive image and audio signals from an external apparatus. Meanwhile, a wireless transceiver can be configured to perform short-range wireless communication with other electronic apparatus.

. The network interface 135 provides an interface for connecting the image display apparatus 100 to a wired/wireless network including the Internet network. For example, the network interface 135 can be configured to receive, via the network, content or data provided by the Internet, a content provider, or a network operator.

. The memory 140 can store a program for each signal processing and control in the signal processing device 170, and can store signal-processed image, audio, or data signal.

. In addition, the memory 140 can serve to temporarily store image, audio, or data signal input to the external apparatus interface 130. In addition, the memory 140 can store information on a certain broadcast channel through a channel memory function, such as a channel map.

. Although FIG. 2 illustrates that the memory is provided separately from the signal processing device 170, the scope of the present disclosure is not limited thereto. The memory 140 can be included in the signal processing device 170.

. The signal processing device 170 can demultiplex an input stream through the tuner 110, the demodulator 120, or the external apparatus interface 130, or process demultiplexed signals to generate and output a signal for image or audio output.

. The image signal processed by the signal processing device 170 is input to the display 180, and can be displayed as an image corresponding to the image signal. In addition, the image signal processed by the signal processing device 170 can be input to the external output apparatus through the external apparatus interface 130.

. The audio signal processed by the signal processing device 170 can be output to the audio output device 185 as an audio signal. In addition, audio signal processed by the signal processing device 170 can be input to the external output apparatus through the external apparatus interface 130.

. Although not shown in FIG. 2, the signal processing device 170 can include a demultiplexer, an image processor, and the like. This will be described later with reference to FIG. 3.

. In addition, the signal processing device 170 can control the overall operation of the image display apparatus 100. For example, the signal processing device 170 can control the tuner 110 to control the tuning of the RF broadcast corresponding to the channel selected by the user or the previously stored channel.

. In addition, the signal processing device 170 can control the image display apparatus 100 according to a user command input through the user input interface 150 or an internal program.

. Meanwhile, the signal processing device 170 can control the display 180 to display an image. At this time, the image displayed on the display 180 can be a still image or a moving image.

. Meanwhile, the signal processing device 170 can recognize the position of the user based on the image photographed by a photographing device (not shown). For example, the distance (z-axis coordinate) between a user and the image display apparatus 100 can be determined. In addition, the x-axis coordinate and the y-axis coordinate in the display 180 corresponding to a user position can be determined.

. Meanwhile, although not shown in the figure, a channel browsing processor generating a thumbnail image corresponding to a channel signal or an external input signal can be further provided. The channel browsing processor can be configured to receive a stream signal (TS) output from the demodulator 120 or a stream signal output from the external apparatus device 130, extract an image from the input stream signal, and generate a thumbnail image.

. The generated thumbnail image can be stream-decoded together with the decoded image and input to the signal processing device 170. The signal processing device 170 can display a thumbnail list including a plurality of thumbnail images on the display 180 using the input thumbnail image.

. At this time, the thumbnail list can be displayed in a simple view manner in which the thumbnail list is displayed in a partial region in a state in which a certain image is displayed on the display 180, or can be displayed in a full view manner in which the thumbnail list is displayed in most regions of the display 180. Thumbnail images in the thumbnail list can be sequentially updated.

. The power supply 190 supplies corresponding power throughout the wireless media device 300. In particular, the power supply 190 can supply power to the signal processing device 170, which can be implemented in the form of a system on chip (SOC), the transceiver device 160a for communication, the image receiver 105, and the memory 140.

. Meanwhile, the power supply 190 can include a converter that converts AC power into DC power and a dc/dc converter that converts a level of DC power.

. The transceiver device 160a can be configured to perform wireless communication with the second transceiver device 160b in the display device 50.

. The second transceiver device 160b can be configured to perform wireless communication with the transceiver device 160a within the wireless media device 300.

. An image signal and an audio signal received by the second transceiver device 160b can be transmitted to the display 180 and the audio output device 185, respectively.

. The display 180 generates a driving signal by converting an image signal, a data signal, an OSD signal, a control signal processed by the signal processing device 170, an image signal, a data signal, a control signal, and the like received from the external apparatus interface 130.

. The display 180 can be an LCD, OLED, inorganic LED, flexible display, or the like, and can also be a 3D display.

. Meanwhile, the display 180 can be configured as a touch screen and used as an input device in addition to an output device.

. The audio output device 185 converts the audio signal received from the second transceiver device 160b into sound and outputs the sound.

. Meanwhile, the audio output device 185 can include at least one speaker.

. Meanwhile, the power supply 195 supplies corresponding power throughout the display device 50. In particular, the power supply 195 can supply power to each of the second transceiver device 160b for communication, the display 180, the audio output device 185, and the user input interface 150.

. Meanwhile, the power supply 195 can include a converter that converts AC power into DC power, and a dc/dc converter that converts a level of DC power.

. The user input interface 150 can be configured to transmit a signal input by the user to the second transceiver device 160b. Then, the second transceiver device 160b can wirelessly transmit the signal input by the user to the transceiver device 160a, and the signal processing device 170 can be configured to receive the signal input by the user through the transceiver device 160a.

. For example, a user input signal, such as power ON/OFF, channel selection, and screen setting, from the remote controller 200 or a user input signal input from a local key (not shown), such as power key, channel key, volume key, and set value, can be transmitted to the signal processing device 170 via the second transceiver device 160b and the transceiver device 160a.

. Meanwhile, the signal processing device 170 can be configured to transmit various types of information or signals to the remote controller 200 via the transceiver device 160a, the second transceiver device 160b, and the user input interface 150.

. The remote controller 200 transmits the user input to the user input interface 150. To this end, the remote controller 200 can use Bluetooth, a radio frequency (RF) communication, an infrared (IR) communication, an Ultra Wideband (UWB), ZigBee, or the like. In addition, the remote controller 200 can be configured to receive the image, audio, or data signal output from the user input interface 150, and display it on the remote controller 200 or output it as an audio.

. Meanwhile, the image display apparatus 100 can be a fixed or mobile digital broadcast receiver capable of receiving digital broadcast.

. Meanwhile, a block diagram of the image display apparatus 100 shown in FIG. 2 is a block diagram for an embodiment of the present disclosure. Each component of the block diagram can be integrated, added, or omitted according to a specification of the image display apparatus 100 actually implemented. That is, two or more components can be combined into a single component as needed, or a single component can be split into two or more components. The function performed in each block is described for the purpose of illustrating embodiments of the present disclosure, and specific operation and apparatus do not limit the scope of the present disclosure.

. FIG. 3 is an internal block diagram of the signal processing device in FIG. 2.

. Referring to the figure, the signal processing device 170 according to an embodiment of the present disclosure can include a demultiplexer 310, an image processor 320, a processor 330, an OSD processor 340, a mixer 345, a frame rate converter 350, a formatter 360, and an audio processor 370. In addition, the signal processing device 170 can further include an audio processor 370 and a data processor (not shown) .

. The demultiplexer 310 demultiplexes the input stream. For example, in case in which an MPEG-2 TS is input, it can be demultiplexed into image, audio, and data signal, respectively. Here, the stream signal input to the demultiplexer 310 can be a stream signal output from the tuner 110, the demodulator 120, or the external apparatus interface 130.

. The image processor 320 can be configured to perform image processing on a demultiplexed image signal. To this end, the image processor 320 can include an image decoder 325 and a scaler 335.

. The image decoder 325 decodes a demultiplexed image signal, and the scaler 335 performs scaling so that the resolution of the decoded image signal can be output from the display 180.

. The image decoder 325 can include a decoder of various standards.

. The processor 330 can control overall operations within the signal processing device 170. For example, the processor 330 can control the tuner 110 to select (tune) an RF broadcast corresponding to a channel selected by the user or a pre-stored channel.

. Also, the processor 330 can control the image display apparatus 100 according to a user command input through the user input interface 150 or an internal program.

. Also, the processor 330 can control data transmission with the network interface 135 or the external apparatus device 130.

. Also, the processor 330 can control operations of the demultiplexer 310, the image processor 320, the OSD processor 340, and the like within the signal processing device 170.

. The OSD processor 340 generates an OSD signal according to a user input or by itself. For example, based on a user input signal, the OSD processor 340 can generate a signal for displaying various information as a graphic or a text on the screen of the display 180. The generated OSD signal can include various data, such as a user interface screen of the image display apparatus 100, various menu screens, a widget, and an icon. In addition, the generated OSD signal can include a 2D object or a 3D object.

. In addition, the OSD processor 340 can generate a pointer that can be displayed on the display, based on a pointing signal input from the remote controller 200. In particular, such a pointer can be generated by a pointing signal processor, and the OSD processor 340 can include such a pointing signal processor (not shown). Obviously, the pointing signal processor (not shown) can be provided separately from the OSD processor 340.

. The mixer 345 can mix the OSD signal generated by the OSD processing unit 340 and the decoded image signal image-processed by the image processor 320. In this case, the OSD signal and the decoded image signal can each include at least one of a 2D signal and a 3D signal. The mixed image signal is provided to the frame rate converter 350.

. The frame rate converter (FRC) 350 can convert a frame rate of an input image. Meanwhile, the frame rate converter 350 can output the input image without converting the frame rate.

. Meanwhile, the formatter 360 can be configured to receive a signal mixed by the mixer 345, that is, an OSD signal, and the decoded image signal, and change a format of the image signal.

. Meanwhile, although not shown in the figure, it is possible to further dispose a 3D processor (not shown) for 3D effect signal processing after the formatter 360. Such a 3D processor (not shown) can process brightness, tint, and color control of an image signal to improve a 3D effect. For example, signal processing can be performed to make a short distance clear and a long distance blur. Meanwhile, the function of the 3D processor can be merged into the formatter 360 or merged into the image processor 320.

. Meanwhile, the audio processor 370 in the signal processing device 170 can process a demultiplexed audio signal or an audio signal of certain content. To this end, the audio processor 370 can include various decoders.

. In addition, the audio processor 370 in the signal processing device 170 can process a base, a treble, a volume control, and the like.

. The data processor (not shown) in the signal processing device 170 can be configured to perform data processing of the demultiplexed data signal. For example, in case in which the demultiplexed data signal is a coded data signal, it can be decoded. The encoded data signal can be electronic program guide information including broadcast information, such as a start time and an end time of a broadcast program broadcasted on each channel.

. Meanwhile, in FIG. 3, it is illustrated that signals from the OSD processor 340 and the image processor 320 are mixed in the mixer 345 and then processed in the formatter 360, but the present disclosure is not limited thereto, and the mixer can be located behind the formatter.

. Meanwhile, a block diagram of the signal processing device 170 shown in FIG. 3 is a block diagram for an embodiment of the present disclosure. Each component of the block diagram can be integrated, added, or omitted according to a specification of the signal processing device 170 actually implemented.

. In particular, the frame rate converter 350 and the formatter 360 can not be provided in the signal processing device 170, but can be separately provided or separately provided as a single module.

. FIG. 4A is a diagram illustrating a control method of a remote controller of FIG. 2.

. As shown in FIG. 4A (a), it is illustrated that a pointer 205 corresponding to the remote controller 200 is displayed on the display 180.

. The user can move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 can be referred to as a space remote controller or a 3D pointing apparatus, because the pointer 205 is moved and displayed according to the movement in a 3D space, as shown in the figure.

. FIG. 4A(b) illustrates that in case in which the user moves the remote controller 200 to the left, the pointer 205 displayed on the display 180 of the image display apparatus also moves to the left correspondingly.

. Information on the motion of the remote controller 200 detected through a sensor of the remote controller 200 is transmitted to the image display apparatus. The image display apparatus can calculate the coordinate of the pointer 205 from the information on the motion of the remote controller 200. The image display apparatus can display the pointer 205 to correspond to the calculated coordinate.

. FIG. 4A(c) illustrates a case in which the user moves the remote controller 200 away from the display 180, while pressing a specific button of the remote controller 200. Thus, a selection region within the display 180 corresponding to the pointer 205 can be zoomed in so that it can be displayed to be enlarged. Meanwhile, in case in which the user moves the remote controller 200 close to the display 180, the selection region within the display 180 corresponding to the pointer 205 can be zoomed out so that it can be displayed to be reduced. Meanwhile, in case in which the remote controller 200 moves away from the display 180, the selection region can be zoomed out, and in case in which the remote controller 200 approaches the display 180, the selection region can be zoomed in.

. Meanwhile, in case in which the specific button of the remote controller 200 is pressed, it is possible to exclude the recognition of vertical and lateral movement. That is, in case in which the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state in which the specific button of the remote controller 200 is not pressed.

. Meanwhile, the moving speed or the moving direction of the pointer 205 can correspond to the moving speed or the moving direction of the remote controller 200.

. FIG. 4B is an internal block diagram of the remote controller of FIG. 2.

. Referring to the figure, the remote controller 200 includes a wireless transceiver 425, a user input device 435, a sensor device 440, an output device 450, a power supply 460, a memory 470, and a controller 480.

. The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

. In the present embodiment, the remote controller 200 can include an RF module 421 for transmitting and receiving signals to and from the image display apparatus 100 according to a RF communication standard. In addition, the remote controller 200 can include an IR module 423 for transmitting and receiving signals to and from the image display apparatus 100 according to a IR communication standard.

. In the present embodiment, the remote controller 200 transmits a signal containing information on the motion of the remote controller 200 to the image display apparatus 100 through the RF module 421.

. In addition, the remote controller 200 can be configured to receive the signal transmitted by the image display apparatus 100 through the RF module 421. In addition, if necessary, the remote controller 200 can be configured to transmit a command related to power on/off, channel change, volume change, and the like to the image display apparatus 100 through the IR module 423.

. The user input device 435 can be implemented by a keypad, a button, a touch pad, a touch screen, or the like. The user can operate the user input device 435 to input a command related to the image display apparatus 100 to the remote controller 200. in case in which the user input device 435 includes a hard key button, the user can input a command related to the image display apparatus 100 to the remote controller 200 through a push operation of the hard key button. in case in which the user input device 435 includes a touch screen, the user can touch a soft key of the touch screen to input the command related to the image display apparatus 100 to the remote controller 200. In addition, the user input device 435 can include various types of input means, such as a scroll key, a jog key, etc., which can be operated by the user, and the present disclosure does not limit the scope of the present disclosure.

. The sensor device 440 can include a gyro sensor 441 or an acceleration sensor 443. The gyro sensor 441 can sense information regarding the motion of the remote controller 200.

. For example, the gyro sensor 441 can sense information on the operation of the remote controller 200 based on the x, y, and z axes. The acceleration sensor 443 can sense information on the moving speed of the remote controller 200. Meanwhile, a distance measuring sensor can be further provided, and thus, the distance to the display 180 can be sensed.

. The output device 450 can output an image or an audio signal corresponding to the operation of the user input device 435 or a signal transmitted from the image display apparatus 100. Through the output device 450, the user can recognize whether the user input device 435 is operated or whether the image display apparatus 100 is controlled.

. For example, the output device 450 can include an LED module 451 that is turned on in case in which the user input device 435 is operated or a signal is transmitted/received to/from the image display apparatus 100 through the wireless transceiver 425, a vibration module 453 for generating a vibration, an audio output module 455 for outputting an audio, or a display 457 for outputting an image.

. The power supply 460 supplies power to the remote controller 200. in case in which the remote controller 200 is not moved for a certain time, the power supply 460 can stop the supply of power to reduce a power waste. The power supply 460 can resume power supply in case in which a certain key provided in the remote controller 200 is operated.

. The memory 470 can store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 can store information regarding a frequency band or the like for wirelessly transmitting and receiving a signal to/from the image display apparatus 100 paired with the remote controller 200 in the memory 470 and can refer to the stored information.

. The controller 480 controls various matters related to the control of the remote controller 200. The controller 480 can be configured to transmit a signal corresponding to a certain key operation of the user input device 435 or a signal corresponding to the motion of the remote controller 200 sensed by the sensor device 440 to the image display apparatus 100 through the wireless transceiver 425.

. The user input interface 150 of the image display apparatus 100 includes a wireless transceiver 151 that can wirelessly transmit and receive a signal to and from the remote controller 200 and a coordinate value calculator 415 that can calculate the coordinate value of a pointer corresponding to the operation of the remote controller 200.

. The user input interface 150 can wirelessly transmit and receive a signal to and from the remote controller 200 through the RF module 412. In addition, the user input interface 150 can be configured to receive a signal transmitted by the remote controller 200 through the IR module 413 according to a IR communication standard.

. The coordinate value calculator 415 can correct a hand shake or an error from a signal corresponding to the operation of the remote controller 200 received through the wireless transceiver 151 and calculate the coordinate value (x, y) of the pointer 205 to be displayed on the display 180.

. The transmission signal of the remote controller 200 inputted to the image display apparatus 100 through the user input interface 150 is transmitted to the controller 180 of the image display apparatus 100. The controller 180 can be configured to determine the information on the operation of the remote controller 200 and the key operation from the signal transmitted from the remote controller 200, and, correspondingly, control the image display apparatus 100.

. For another example, the remote controller 200 can calculate the pointer coordinate value corresponding to the operation and output it to the user input interface 150 of the image display apparatus 100. In this case, the user input interface 150 of the image display apparatus 100 can be configured to transmit information on the received pointer coordinate value to the controller 180 without a separate correction process of hand shake or error.

. For another example, unlike the figure, the coordinate value calculator 415 can be provided in the signal processing device 170, not in the user input interface 150.

. FIG. 5 is an internal block diagram of a display of FIG. 2.

. Referring to FIG. 5, the display 180 can include an organic light emitting diode panel 210, a first interface 230, a second interface 231, a timing controller 232, a gate driver 234, a data driver 236, a memory 240, a processor 270, a power supply 290, a current detector 510, and the like.

. The display 180 receives an image signal Vd, a first DC power V1, and a second DC power V2, and can display a certain image based on the image signal Vd.

. Meanwhile, the first interface 230 in the display 180 can be configured to receive the image signal Vd and the first DC power V1 from the signal processing device 170.

. Here, the first DC power V1 can be used for the operation of the power supply 290 and the timing controller 232 in the display 180.

. Next, the second interface 231 can be configured to receive a second DC power V2 from an external power supply 190. Meanwhile, the second DC power V2 can be input to the data driver 236 in the display 180.

. The timing controller 232 can output a data driving signal Sda and a gate driving signal Sga, based on the image signal Vd.

. For example, in case in which the first interface 230 converts the input image signal Vd and outputs the converted image signal va1, the timing controller 232 can output the data driving signal Sda and the gate driving signal Sga based on the converted image signal va1.

. The timing controller 232 can further receive a control signal, a vertical synchronization signal Vsync, and the like, in addition to the image signal Vd from the signal processing device 170.

. In addition to the image signal Vd, based on a control signal, a vertical synchronization signal Vsync, and the like, the timing controller 232 generates a gate driving signal Sga for the operation of the gate driver 234, and a data driving signal Sda for the operation of the data driver 236.

. At this time, in case in which the panel 210 includes a RGBW subpixel, the data driving signal Sda can be a data driving signal for driving of RGBW subpixel.

. Meanwhile, the timing controller 232 can further output a control signal Cs to the gate driver 234.

. The gate driver 234 and the data driver 236 supply a scan signal and an image signal to the organic light emitting diode panel 210 through a gate line GL and a data line DL respectively, according to the gate driving signal Sga and the data driving signal Sda from the timing controller 232. Accordingly, the organic light emitting diode panel 210 displays a certain image.

. Meanwhile, the organic light emitting diode panel 210 can include an organic light emitting layer. In order to display an image, a plurality of gate lines GL and data lines DL can be disposed in a matrix form in each pixel corresponding to the organic light emitting layer.

. Meanwhile, the data driver 236 can output a data signal to the organic light emitting diode panel 210 based on a second DC power V2 from the second interface 231.

. The power supply 290 can supply various power supplies to the gate driver 234, the data driver 236, the timing controller 232, and the like.

. The current detector 510 can be configured to detect the current flowing in a sub-pixel of the organic light emitting diode panel 210. The detected current can be input to the processor 270 or the like, for a cumulative current calculation.

. The processor 270 can be configured to perform each type of control of the display 180. For example, the processor 270 can control the gate driver 234, the data driver 236, the timing controller 232, and the like.

. Meanwhile, the processor 270 can be configured to receive current information flowing in a sub-pixel of the organic light emitting diode panel 210 from the current detector 510.

. In addition, the processor 270 can calculate the accumulated current of each subpixel of the organic light emitting diode panel 210, based on information of current flowing through the subpixel of the organic light emitting diode panel 210. The calculated accumulated current can be stored in the memory 240.

. Meanwhile, the processor 270 can be configured to determine as burn-in, if the accumulated current of each sub-pixel of the organic light emitting diode panel 210 is equal to or greater than an allowable value.

. For example, if the accumulated current of each subpixel of the OLED panel 210 is equal to or higher than 300000 A, the processor 270 can be configured to determine that a corresponding subpixel is a burn-in subpixel.

. Meanwhile, if the accumulated current of each subpixel of the OLED panel 210 is close to an allowable value, the processor 270 can be configured to determine that a corresponding subpixel is a subpixel expected to be burn in.

. Meanwhile, based on a current detected by the current detector 510, the processor 270 can be configured to determine that a subpixel having the greatest accumulated current is an expected burn-in subpixel.

. FIG. 6A and FIG. 6B are diagrams referred to in the description of an organic light emitting diode panel of FIG. 5.

. Firstly, FIG. 6A is a diagram illustrating a pixel in the organic light emitting diode panel 210.

. Referring to the figure, the organic light emitting diode panel 210 can include a plurality of scan lines Scan1 to Scann and a plurality of data lines R1, G1, B1, W1 to Rm, Gm, Bm, Wm intersecting the scan lines.

. Meanwhile, a pixel (subpixel) is defined in an intersecting region of the scan line and the data line in the organic light emitting diode panel 210. In the figure, a pixel including sub-pixels SR1, SG1, SB1 and SW1 of RGBW is shown.

. FIG. 6B illustrates a circuit of any one sub-pixel in the pixel of the organic light emitting diode panel of FIG. 6A.

. Referring to the figure, an organic light emitting sub pixel circuit (CRTm) can include, as an active type, a scan switching element SW1, a storage capacitor Cst, a drive switching element SW2, and an organic light emitting layer (OLED).

. The scan switching element SW1 is turned on according to the input scan signal Vdscan, as a scan line is connected to a gate terminal. in case in which it is turned on, the input data signal Vdata is transferred to the gate terminal of a drive switching element SW2 or one end of the storage capacitor Cst.

. The storage capacitor Cst is formed between the gate terminal and the source terminal of the drive switching element SW2, and stores a certain difference between a data signal level transmitted to one end of the storage capacitor Cst and a DC power (VDD) level transmitted to the other terminal of the storage capacitor Cst.

. For example, in case in which the data signal has a different level according to a Plume Amplitude Modulation (PAM) method, the power level stored in the storage capacitor Cst varies according to the level difference of the data signal Vdata.

. For another example, in case in which the data signal has a different pulse width according to a pulse width modulation (PWM) method, the power level stored in the storage capacitor Cst varies according to the pulse width difference of the data signal Vdata.

. The drive switching element SW2 is turned on according to the power level stored in the storage capacitor Cst. in case in which the drive switching element SW2 is turned on, the driving current (IOLED), which is proportional to the stored power level, flows in the organic light emitting layer (OLED). Accordingly, the organic light emitting layer OLED performs a light emitting operation.

. The organic light emitting layer OLED can include a light emitting layer (EML) of RGBW corresponding to a subpixel, and can include at least one of a hole injecting layer (HIL), a hole transporting layer (HTL), an electron transporting layer (ETL), and an electron injecting layer (EIL). In addition, it can include a hole blocking layer, and the like.

. Meanwhile, the subpixels emit a white light in the organic light emitting layer OLED. However, in the case of green, red, and blue subpixels, a subpixel is provided with a separate color filter for color implementation. That is, in the case of green, red, and blue subpixels, each of the subpixels further includes green, red, and blue color filters. Meanwhile, since a white subpixel outputs a white light, a separate color filter is not required.

. Meanwhile, in the figure, it is illustrated that a p-type MOSFET is used for a scan switching element SW1 and a drive switching element SW2, but an n-type MOSFET or other switching element, such as a JFET, IGBT, SIC, or the like are also available.

. Meanwhile, the pixel is a hold-type element that continuously emits light in the organic light emitting layer (OLED), after a scan signal is applied, during a unit display period, specifically, during a unit frame.

. FIG. 7 is a diagram referred to in the description of a transceiver device of FIG. 2 and a second transceiver device.

. Referring to the figure, the transceiver device 160a can include 2*2-based multiple-input and multiple-output (MIMO) antennas ANTa1 to ANTa4 and a processor 165a.

. The transceiver device 160a can output beams for each sector based on the 2*2-based MIMO antennas ANTa1 to ANTa4.

. The transceiver device 160a can be configured to perform wireless communication based on the 802.11 ad/ay standard. Accordingly, media data can be stably transmitted wirelessly.

. The processor 165a can be configured to perform control to transmit a first signal based on a beam having a first shape in which a sector is sequentially changed during a first period, receive a second signal based on a beam having the first shape from the display device 50 during a third period based on selection of the wireless media device 300 of the display device 50 during a second period, approve association with the display device 50 based on network address information in the second signal during a fourth period, transmit a third signal based on a beam having a second shape at an angle less than that of the first shape during a fifth period, and transmit wireless media to the display device 50 based on a beam having the second shape during a sixth period.

. Meanwhile, the second transceiver device 160b can include a 2*2-based MIMO antennas ANTb1 to ANTb4 and a second processor 165b.

. The second transceiver device 160b can output beams for each sector based on the 2*2-based MIMO antennas ANTb1 to ANTb4.

. The second transceiver device 160b can be configured to perform wireless communication based on the 802.11 ad/ay standard.

. The second processor 165b can be configured to perform control to receive the first signal based on the beam having the first shape in which a sector is sequentially changed during the first period, select the wireless media device 300 based on the first signal during the second period, transmit the second signal based on the beam having the first shape including network address information during the third period, approve association with the wireless media device 300 during the fourth period, receive the third signal based on the beam having the second shape at an angle less than that of the first shape during the fifth period, and display an image on the display based on reception of wireless media based on the beam having the second shape during the sixth period.

. FIG. 8 is a flowchart illustrating an operation of an image display apparatus.

. Referring to the figure, during the first period (S910), the transceiver device 160a in the wireless media device 300 of the image display apparatus 100 transmits the first signal based on the beam having first shape in which a sector is sequentially changed. Meanwhile, the first period S910 can be referred to as a scan period.

. During the second period (S920), the second transceiver device 160b in the display device 50 of the image display apparatus 100 selects one beam from among a plurality of received beams. Meanwhile, the second period (S920) can be referred to as a basic service set (BSS) join period.

. For example, during the second period (S920), the second transceiver device 160b in the display device 50 can be configured to select a beam output from the wireless media device 300, rather than other wireless media devices.

. Meanwhile, during the second period (S920), the second transceiver device 160b in the display device 50 can extract a beacon signal in the first signal based on the beam having the first shape and roughly recognize position information of the wireless media device 300 based on the beacon signal.

. Also, the second transceiver device 160b in the display device 50 transmits the second signal based on the beam having the first shape. The second signal here can include information related to the second transceiver device 160b. For example, the second signal can include sector information.

. During the third period (S930) after the second period (S920), the transceiver device 160a within the wireless media device 300 receives the second signal based on the beam having the first shape from the display device 50. Meanwhile, the third period S930 can be referred to as a sector level sweep (SLS) period.

. Meanwhile, during the third period (S930), the transceiver device 160a in the wireless media device 300 can be configured to select any one of a plurality of sectors.

. For example, during the third period (S930), the transceiver device 160a in the wireless media device 300 can be configured to select any one of the plurality of sectors based on sector information in the second signal.

. During the fourth period (S940) after the third period (S930), the transceiver device 160a in the wireless media device 300 approves association with the display device 50 based on the network address information (e.g., MAC address information) in the second signal. The fourth period (S940) can be referred to as an association period.

. Meanwhile, during the fourth period (S940), the transceiver device 160a in the wireless media device 300 can approve the association with the display device 50 based on the network address information and communication available channel information in the second signal.

. During the fifth period (S950) after the fourth period (S940), the transceiver device 160a in the wireless media device 300 transmits the third signal based on the beam having the second shape at an angle less than that of the first shape. The fifth period (S950) can be referred to as a MIMO beamforming period.

. During the fifth period (S950), the transceiver device 160a in the wireless media device 300 can be configured to select any one of a plurality of beams within the selected sector.

. Also, during the fifth period (S950), the transceiver device 160a in the wireless media device 300 can output the beam having the second shape having a beam width narrower than the first shape based on the selected sector.

. During the sixth period (S960) after the fifth period (S950), wireless media is transmitted to the display device 50 based on the beam having the second shape. The sixth period (S960) can be referred to as a data transfer period.

. Meanwhile, the transceiver device 160a in the wireless media device 300 can be configured to determine whether an error occurs during wireless media transmission, and in case in which an error does not occur, the transceiver device 160a in the wireless media device 300 can control the sixth period (S960) to be continuously performed, and in case in which an error occurs, the transceiver device 160a in the wireless media device 300 can control the fifth period and the sixth period (S950 and S960) to be performed again, control the third period to the sixth period (S930 to S960) to be performed again, or control the first period to the sixth period (S930 to S960) to be performed again, selectively, depending on an error range. Accordingly, the error can be efficiently recovered depending on the error range.

. Meanwhile, in case in which wireless media is received, the second transceiver device 160b can control the fifth period and the sixth period (S950 and S960) to be performed again, control the third period to the sixth period (S930 to S960) to be performed again, or control the first period to the sixth period (S910 to S960) to be performed again, selectively, depending on an error range. Accordingly, an error can be efficiently recovered depending on the error range.

. FIG. 9 is a view referred to in the description of FIG. 8.

. Referring to the figure, FIG. 9 is a diagram illustrating a beamforming process.

. First, (a) of FIG. 9 illustrates that, as in step 910 (S910), a beam having a first shape in which a sector is sequentially changed is output from the transceiver device 160a. At this time, the second transceiver device 160b can be configured to perform scanning.

. (b) of FIG. 9 illustrates receiving of a plurality of beams by the second transceiver device 160b.

. (c) of FIG. 9 illustrates that a beam corresponding to any one sector among a plurality of beams is output from the transceiver device 160a. In response to this, the second transceiver device 160b receives the beam of the corresponding sector.

. (d) of FIG. 9 illustrates that the second transceiver device 160b performs beam tracking. The second transceiver device 160b can be configured to select any one of a plurality of received beams based on beam strength and the like.

. FIGS. 10A to 12C are diagrams referred to in the description of an operation of a wireless media device related to the present disclosure.

. FIG. 10A is a diagram illustrating an example of a structure of a training field for beam training.

. Referring to the figure, a training field based on the 802.11ad standard can include an automatic gain control (AGC) field and a plurality of training units TRN Unit0, TRN Unit1, ...

. Meanwhile, the AGC field can include a plurality of pieces of AGC information AGC1 to AGC8.

. Meanwhile, a first training unit TRN Unit0 can include channel estimation information CE and a plurality of pieces of TRN information TRN1 to TRN4, and the second training unit TRN Unit1 can include channel estimation information CE and a plurality of pieces of TRN information TRN5 to TRN8.

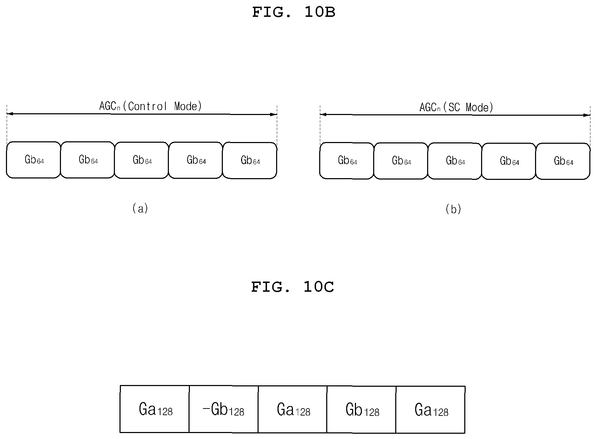

. FIG. 10B illustrates an internal structure of the AGC information of FIG. 10A.

. Referring to the figure, AGC information can be classified into AGC information for a control mode and AGC information for a single carrier (SC) mode.

. Meanwhile, the AGC information for a control mode and the AGC information for an SC mode can each include five Ga64 sequences.

. FIG. 10C illustrates an internal structure of the channel estimation information CE of FIG. 10A.

. Referring to the figure, the channel estimation information CE can include 5 Golay sequences for channel estimation.

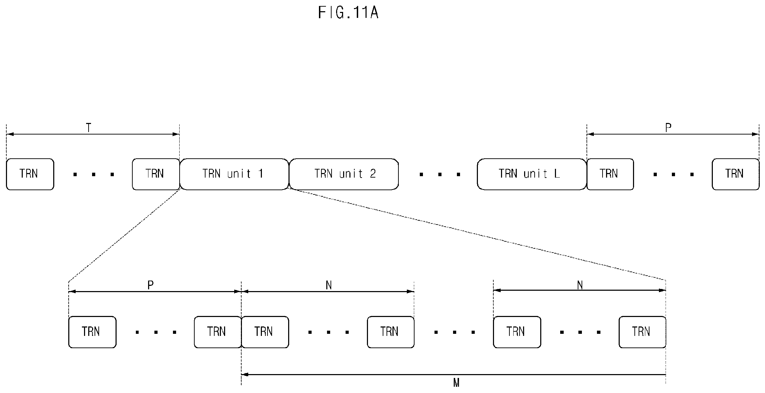

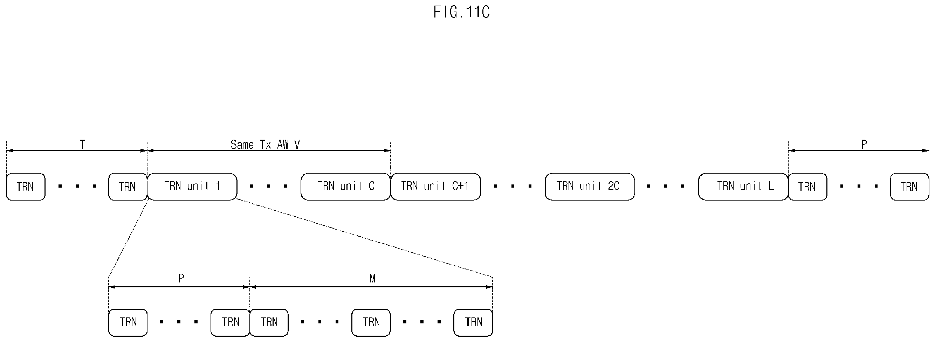

. FIG. 11A is a diagram illustrating another example of a structure of a training field for beam training.

. Referring to the figure, a training field based on the 802.11ay standard includes T training subfields TRN, a plurality of training units TRN Unit1 to TRN UnitL, and P training subfields TRN.

. The T training subfields TRN are fields for a transition time and do not perform any operation.

. Meanwhile, among the plurality of training units TRN Unit1 to TRN UnitL, a first training unit TRN Unit1 can include N training subfields TRN.

. Meanwhile, different transmit AWV indices can be used for N training subfields TRN, respectively.

. Meanwhile, AGC can operate each time the AWV index changes.

. Meanwhile, the P training subfields TRN can be configured to perform the same role as that of the channel estimation information CE of FIGS. 10A to 10C.

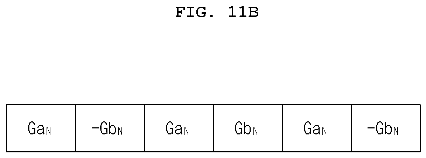

. FIG. 11B illustrates an internal structure of the training subfield TRN of FIG. 11A.

. Referring to the figure, the training subfield TRN can include 6 Golay sequences.

. 11C is a diagram illustrating another example of a structure of a training field for beam training.

. Referring to the figure, the training field based on the 802.11ay standard can include T training subfields TRN, a plurality of training units TRN Unit1 to TRN UnitL, and P training subfields TRN.

. The T training subfields TRN are fields for a transition time and do not perform any operation.

. Meanwhile, among the plurality of training units TRN Unit1 to TRN UnitL, the first training unit TRN Unit1 can include P training subfields TRN and N training subfields TRN.

. Meanwhile, the same Transmit AWV index is applied to C training units TRN Unit1 to TRN UnitC among the plurality of training units TRN Unit1 to TRN UnitL.

. Meanwhile, the P training subfields TRN can be configured to perform the same role as that of the channel estimation information CE of FIGS. 10A to 10C.

. Meanwhile, it can be received while changing the Receive AWV index within C×M training subfields TRNs.

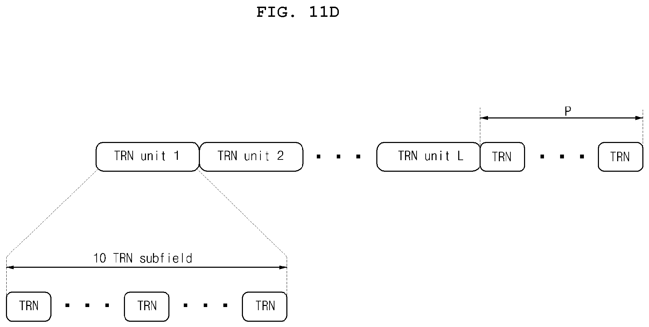

. FIG. 11D is a diagram illustrating another example of a structure of a training field for beam training.

. Referring to the figure, a training field based on the 802.11ay standard can include L training units TRN Unit1 to TRN UnitL and P training subfields TRN.

. Among the plurality of training units TRN Unit1 to TRN UnitL, a first training unit TRN Unit1 can include 10 training subfields.

. Meanwhile, in the plurality of training units TRN Unit1 to TRN UnitL, the same Transmit AWV index can be applied, and the P training subfields TRN play the same role as that of the channel estimation information CE of FIGS. 10A to 10C.

. Meanwhile, it can be received while changing the Receive AWV index within 10×L training subfields TRN.

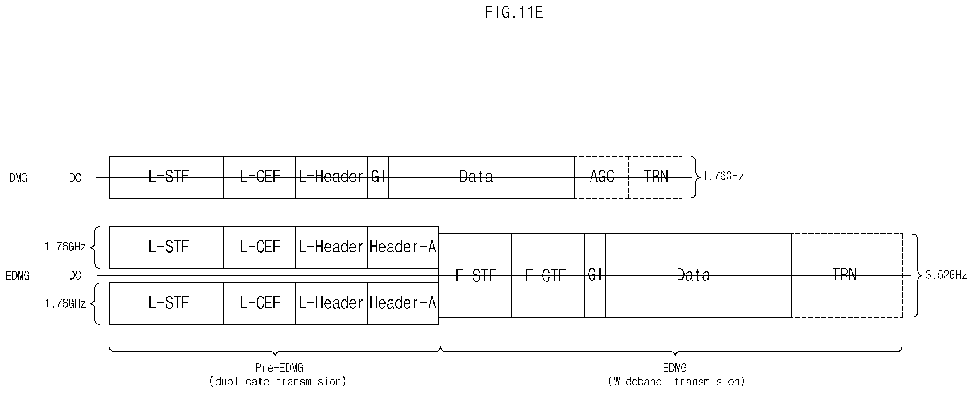

. FIG. 11E illustrates a frame structure for transmission of a PHY protocol data unit (PPDU) in a single mode.

. Referring to the figure, a data frame DMG based on the an 802.11ad can include a legacy-short training field (L-STF) corresponding to training information, a legacy-channel estimation field (L-CEF) corresponding to channel estimation information, legacy-header (L-header), data, AGC, and training subfield TRN.

. A data frame EDMG based on the 802.11ad can include L-STF corresponding to training information, L-CEF corresponding to channel estimation information, L-header, Header-A, and EDMG-short training field (E-STF) corresponding to training information, an EDMG-channel estimation field (E-CEF) corresponding to channel estimation information, data, and a training subfield TRN.

. Meanwhile, among data frames (EDMG) based on the 802.11ay, the L-STF, L-CEF, L-CEF, L-header, and Header-Asms can be used for duplicate transmission, and E-CEF, data, the training subfield TRN can be used for wideband transmission.

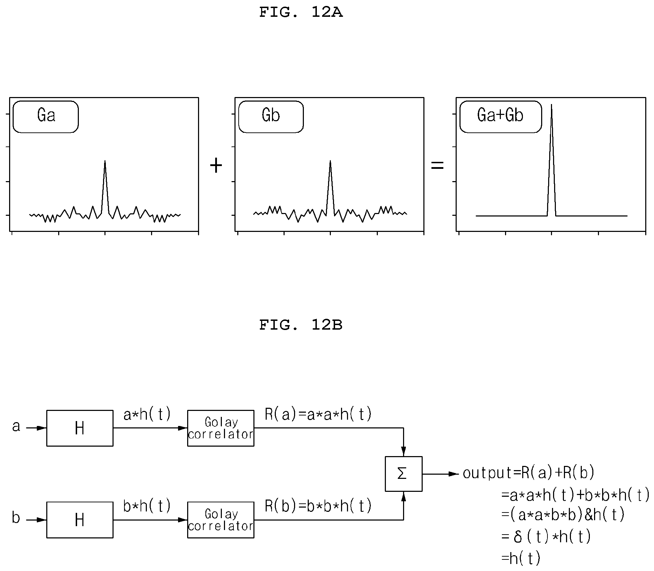

. FIGS. 12A and 12B are diagrams illustrating channel estimation using a Golay sequence.

. FIG. 12A illustrates the sum of a first pattern Ga and a second pattern Gb of the Golay sequence.

. FIG. 12B illustrates an operation using a transfer function H and a Golay correlator for the first pattern Ga and the second pattern Gb, respectively, and summing an operation result using an adder.

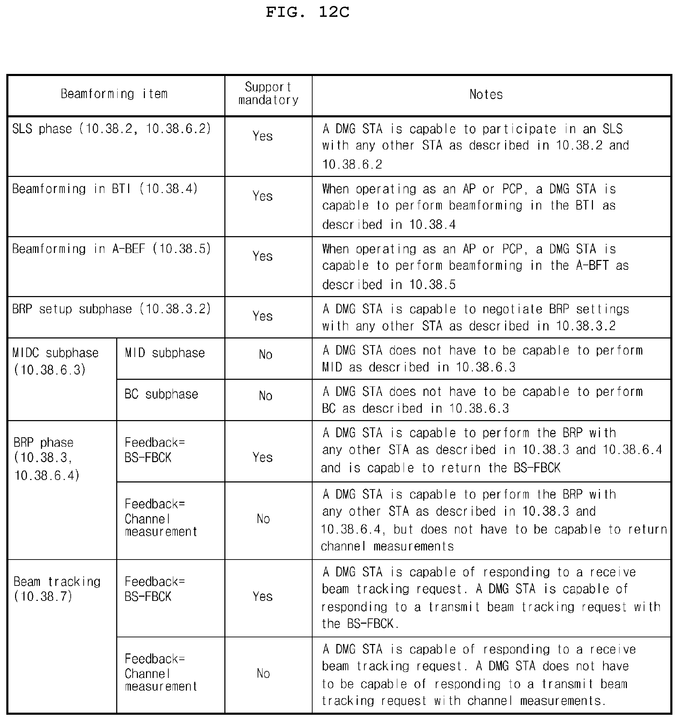

. FIG. 12C is a diagram illustrating a beamforming procedure.

. Referring to the figure, an SLS phase is related to sector level sweep and performs beam training on a region divided into large zones. Meanwhile, (a) of FIG. 9 can correspond to the SLS phase.

. Beamforming in BTI performs beam training on an initiator, such as a PCP (e.g., the wireless media device 300).

. Beamforming in A-BFT performs beam training on a responder (e.g., the display device 50), such as NPCP.

. A BRP setup subphase exchanges beam refinement capability information and requests execution of a BRP subphase.

. An MIDC subphase can include an MID subphase and a BC subphase.

. In an MID subphase, a quasi-omni transmission pattern is tested for a plurality of receive AWVs, and in a BC subphase, a set of transmit AWV and receive AWV are tested in combination.

. Meanwhile, (b) of FIG. 9 can correspond to the MID subphase, and (c) of FIG. 9 can correspond to the BC subphase.

. A BRP phase can include BS-FBCK and channel measurement.

. Beam refinement is a request/response-based process, and additional transmit beam/receive beam training can be requested by PCP/NPCP.

. Beam tracking can include BS-FBCK and channel measurement.

. Beam tracking can be performed in a data transfer interval (DTI).

. Meanwhile, the initiator (e.g., the wireless media device 300) can request beam tracking for an initiator (e.g., the wireless media device 300) or a responder (e.g., the display device 50).

. Meanwhile, (d) of FIG. 9 can correspond to a BRP phase or beam tracking.

. FIG. 13 is a flowchart illustrating an operation of a wireless media device according to an embodiment of the present disclosure.

. A transceiver device 160a in the wireless media device 300 according to the embodiment of the present disclosure performs a first filtering to react at a first speed based on a link quality between the wireless media device 300 and the display device 50 (S1410).

. Next, the transceiver device 160a performs, based on the link quality between the wireless media device 300 and the display device 50, a second filtering to react at a second speed slower than the first speed (S1415).

. Next, it can be determined whether a difference between a result of the first filtering and a result of the second filtering is equal to or greater than a set value (S1420), and when the difference is equal to or greater than the set value, it can be determined that there is a blockage between the wireless media device 300 and the display device 50 (S1430), a beam currently in use can be abandoned (S1435), and beam tracking can be controlled to be performed (S1440).

. Meanwhile, the transceiver device 160a can be configured to select a beam candidate group based on the link quality between the wireless media device 300 and the display device 50, manage the beam candidate group, and perform the beam tracking based on a plurality of candidate beams in the beam candidate group in response to the difference between the result of the first filtering and the result of the second filtering being equal to or greater than the set value.

. Meanwhile, the transceiver device 160a can be configured to select a beam with a best link quality between the wireless media device 300 and the display device 50, or an optimal beam during the beam tracking. Accordingly, the beam tracking can be performed rapidly based on the blockage detection.

. In addition, the transceiver device 160a can be configured to transmit media data using the selected beam (S1445). Accordingly, stable media data transmission is enabled.

. Meanwhile, in step S1420 (S1420), in response to the difference between the result of the first filtering and the result of the second filtering being less than the set value, the transceiver device 160a can be configured to transmit the media data by using a current beam as it is without performing the beam tracking (S1425). Accordingly, the stable media data transmission is enabled.

. That is, the transceiver device 160a in the wireless media device 300 according to the embodiment of the present disclosure performs, based on the link quality between the wireless media device 300 and the display device 50, each of the first filtering to react at a first speed and the second filtering to react at a second speed slower than the first speed, and performs the beam tracking based on the difference between the result of the first filtering and the result of the second filtering. Accordingly, the beam tracking can be performed rapidly based on the blockage detection. In particular, by changing the beam at the time of the blockage detection, the stable media data transmission is enabled.

. Meanwhile, the transceiver device 160a in the wireless media device 300 according to the embodiment of the present disclosure can be configured to select a beam candidate group based on the link quality measured between the wireless media device 300 and the display device 50. Beam candidate group selection can be performed jointly at the time of the beam tracking.

. The transceiver device 160a can be configured to transmit a plurality of beams in different directions, according to a transmission angle, for the beam tracking.

. At this time, the transceiver device 160a can be configured to select the beam candidate group based on the measured link quality.

. Meanwhile, the transceiver device 160a can be configured to identify a plurality of regions for a beam candidate group, select candidate beams from some of the plurality of regions, and manage the same.

. Meanwhile, the transceiver device 160a can be configured to select a first number of beams as candidates in a first region to which a first beam belongs among the plurality of regions, select a second number of beams as candidates in a second region adjacent to the first region in a first direction, among the plurality of regions, and select a third number of beams as candidates in a third region adjacent to the first region in a second direction, among the plurality of regions.

. Meanwhile, the first region can be a region in which a beam having the highest link quality exists.

. Alternatively, the first region can be a region corresponding to an LOS path.

. Meanwhile, the second region can be a region disposed in a vertical direction of the first region, and the third region can be a region disposed in a horizontal direction of the first region.

. Meanwhile, in case in which selecting a plurality of candidate beams in a plurality of regions, the transceiver device 160a can be configured to select different numbers of candidate beams in the first to third regions.

. For example, the transceiver device 160a can be configured to select candidate beams such that the second number is greater than the first number and the second number is greater than the third number.

. As another example, the transceiver device 160a can be configured to select candidate beams such that the third number is greater than the first number.

. Meanwhile, since the first region mostly corresponds to a front direction, the transceiver device 160a can be configured to select only one best beam in the first region as a candidate beam.

. Meanwhile, the transceiver device 160a can be configured to select about 6 beams as candidate beams in consideration of a possibility that the second region is selected by a side robe.

. Meanwhile, since there is a possibility that the third region does not exist compared to the second region, the transceiver device 160a can be configured to select about four beams as candidate beams.

. Meanwhile, the plurality of regions can further include a fourth region in which candidate beams are not selected.

. Meanwhile, since a probability that a good beam exists in the fourth region is low, the transceiver device 160a can not select a candidate beam.

. Meanwhile, the operation of the wireless media device 300 described above with reference to FIG. 13 can be applied to the operation of the display device 50 as it is.

. Referring to FIG. 13, the second transceiver device 160a in the display device 50 according to the embodiment of the present disclosure can be configured to perform the first filtering to react at the first speed based on the link quality between the wireless media device 300 and the display device 50.

. Next, the second transceiver device 160a in the display device 50 according to the embodiment of the present disclosure can be configured to perform the second filtering to react at the second speed that is lower than the first speed based on the link quality between the wireless media device 300 and the display device 50.

. Next, in response to the difference between the result of the first filtering and the result of the second filtering being equal to or greater than the set value, it can be determined that there is a blockage between the wireless media device 300 and the display device 50, a beam currently in use can be abandoned, and the beam tracking can be controlled to be performed.

. Meanwhile, the second transceiver device 160b in the display device 50 can be configured to select the beam candidate group based on the link quality between the wireless media device 300 and the display device 50, manage the beam candidate group, and perform the beam tracking based on a plurality of candidate beams in the beam candidate group in response to the difference between the result of the first filtering and the result of the second filtering being equal to or greater than the set value.

. Meanwhile, the second transceiver device 160b in the display device 50 a can be configured to select a beam with a best link quality between the wireless media device 300 and the display device 50, or an optimal beam during the beam tracking. Accordingly, the beam tracking can be performed rapidly based on the blockage detection.

. In addition, the second transceiver device 160b in the display device 50 can be configured to receive the media data using the selected beam. Accordingly, stable media data reception is enabled.

. Meanwhile, in response to the difference between the result of the first filtering and the result of the second filtering being less than the set value, the transceiver device 160b in the display device 50 can be configured to receive the media data by using a current beam as it is without performing the beam tracking. Accordingly, the stable media data reception is enabled.

. That is, the transceiver device 160b in the display device 50 according to the embodiment of the present disclosure performs, based on the link quality between the wireless media device 300 and the display device 50, each of the first filtering to react at the first speed and the second filtering to react at the second speed slower than the first speed, and performs the beam tracking based on the difference between the result of the first filtering and the result of the second filtering. Accordingly, the beam tracking can be performed rapidly based on the blockage detection. In particular, by changing the beam at the time of the blockage detection, the stable media data reception is enabled.

. Meanwhile, the second transceiver device 160b in the display device 50 according to the embodiment of the present disclosure can be configured to select a beam candidate group based on the link quality between the wireless media device 300 and the display device 50. Beam candidate group selection can be performed jointly at the time of the beam tracking.

. The second transceiver device 160b in the display device 50 can be configured to transmit a plurality of beams in different directions, according to transmission angles, for the beam tracking.

. At this time, the second transceiver device 160b in the display device 50 can be configured to select the beam candidate group based on the determined link quality.

. Meanwhile, the second transceiver device 160b in the display device 50 can be configured to divide a plurality of regions for the beam candidate group, and select and manage a candidate beam in some of the plurality of regions.

. FIGS. 14A to 16C are diagrams referred to in the description of FIG. 13.

. First, FIG. 14A is a diagram illustrating that while the wireless media device 300 outputs a plurality of beams to the display device 50, an object OBJ exists between the wireless media device 30 and the display device 50 and a blockage occurs.

. Referring to FIG. 14A, the transceiver device 160a in the wireless media device 300 can be configured to transmit a plurality of beams BM1, BM2, BM3, ... in different directions according to transmission angles.

. For example, a first beam BM1 of the plurality of beams BM1, BM2, BM3, ... can be an LOS beam corresponding to an LOS path, and a second beam BM2 or a third beam BM3 can be a beam corresponding to a side robe.

. As illustrated in FIG. 14A, in a case where the blockage due to the object OBJ occurs at a first time point T1, when the LOS beam is continuously used, media data transmission is not smooth.

. Therefore, in the present disclosure, instantaneous blockage detection is performed based on periodic link quality measurement, not a request of the wireless media device 300 or the display device 50, and when the blockage is detected, the beam tracking is immediately performed.

. That is, the transceiver device 160a in the wireless media device 300 according to the embodiment of the present disclosure performs, based on the link quality between the wireless media device 200 and the display device 50, each of the first filtering to react at a first speed and the second filtering to react at a second speed slower than the first speed, and performs the beam tracking based on the difference between the result of the first filtering and the result of the second filtering. Accordingly, the beam tracking can be performed rapidly based on the blockage detection.

. For example, the transceiver device 160a in the wireless media device 300 can be configured to change the first beam BM1 to the second beam BM2 which is an upward beam of the LOS beam when the blockage due to the object OBJ occurs while transmitting media data with the first beam BM1 which is the LOS beam as illustrated in FIG. 14A. The second beam BM2 at this time can be a beam that is output in a ceiling direction, reflected, and reaches the display device 50. Accordingly, by changing the beam at the time of the blockage detection, stable media data transmission is enabled.

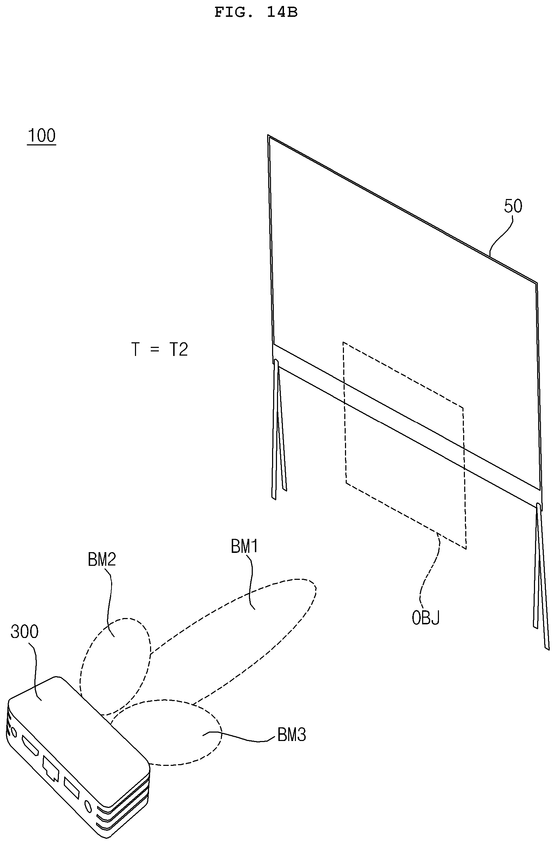

. Next, FIG. 14B is a diagram illustrating that the object OBJ disappears between the wireless media device 300 and the display device 50.

. As illustrated in FIG. 14B, when the object OBJ disappears between the wireless media device 300 and the display device 50 at a second time point T2 that is after the first time point T1, the transceiver device 160a in the wireless media device 200 can use the first beam BM1, which is a beam before the beam change, instead of the second beam BM2 again. Accordingly, stable media data transmission based on blockage detection cancellation is enabled.

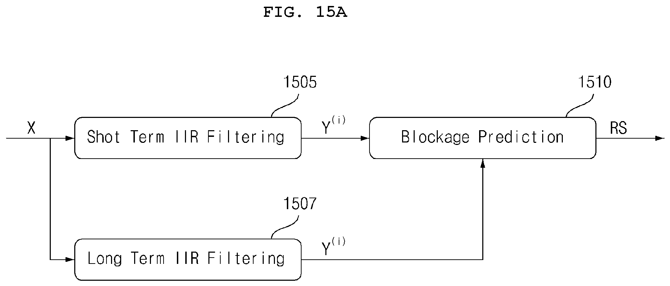

. FIG. 15A is a diagram illustrating first filtering and second filtering operations in the transceiver device 160a.

. Referring to FIG. 15A, a processor 165a in the transceiver device 160a performs each of the first filtering to react at the first speed through a first filter 1505 and performs the second filtering to react at the second speed slower than the first speed through a second filter 1507, and compares, through a predictor 1510, the difference between the result of the first filtering and the result of the second filtering, to output a prediction result or a detection result RS of the blockage between the wireless media device 300 and the display device 50.

. The first filter 1505 and the second filter 1507 as IIR filters perform filtering according to Equation 1 below.

.

$$[\text{Equation 1}]$$

$$Y^{(i)} = a \cdot X + (1 - a) \cdot Y^{(i-1)}$$

.

. Here, X can be a link quality between the wireless media device 300 and the display device 50 as a received signal strength indicator (RSSI), a signal-to-noise ratio (SNR), or the like, a can be a filter coefficient, and Y can be a result value of filtering.

. Meanwhile, a coefficient a of the first filter 1505 is preferably greater than a coefficient a of the second filter 1507.

. Meanwhile, the first filter 1505 can react at the first speed based on the link quality, and the second filter 1507 can react at the second speed slower than the first speed based on the link quality.

. Accordingly, the first filter 1505 can be a short term IIR filter and the second filter 1507 can be a long term IIR filter.

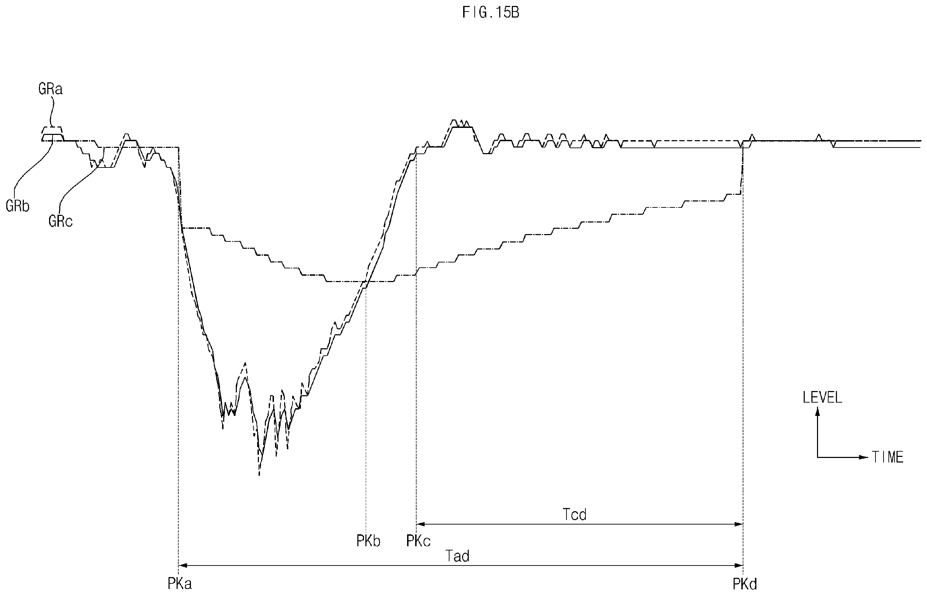

. FIG. 15B is a diagram illustrating a result graph GRb of filtering by the first filter 1505 and a result graph GRc of filtering by the second filter 1507 in FIG. 15A.

. Referring to FIG. 15B, a GRa graph can represent an instantaneous value of the link quality between the wireless media device 300 and the display device 50, a GRb graph can represent a result of the filtering by the first filter 1505, and a GRc graph can represent a result of the filtering by the second filter 1507.

. Since the first filter 1505 is the short term IIR filter, the result of the filtering performed by the first filter 1504 is almost close to the instantaneous value of the link quality as illustrated in FIG. 15B.

. Meanwhile, since the second filter 1507 is the long term IIR filter, the result of the filtering performed by the second filter 1507 shows a significant difference from the instantaneous value of the link quality as illustrated in FIG. 15B.

. The transceiver device 160a according to the present disclosure can be configured to detect a blockage determination time point PKa and a blockage cancellation determination time point PKd by using the result graph GRb of the filtering performed by the first filter 1505 and the result graph GRc of the filtering by the second filter 1507.

. The transceiver device 160a performs, based on the link quality between the wireless media device 300 and the display device 50, each of the first filtering to react at the first speed and the second filtering to react at the second speed slower than the first speed.

. That is, the transceiver device 160a can be configured to perform each of a first filtering based on a first coefficient and a second filtering based on a second coefficient less than the first coefficient.

. Meanwhile, in response to the difference between the result of the first filtering and the result of the second filtering being equal to or greater than the set value, the transceiver device 160a can be configured to determine that the time point is the blockage determination time point PKa.

. Accordingly, the transceiver device 160a can be configured to perform the beam tracking immediately after the blockage determination time point PKa. Accordingly, the beam tracking can be performed rapidly based on the blockage detection.

. At this time, the transceiver device 160a can be configured to perform the beam tracking by using the candidate beam in the beam candidate group that has been previously managed for faster beam tracking. Accordingly, rapid beam tracking is enabled.

. Accordingly, in response to the difference between the result of the first filtering and the result of the second filtering being equal to or greater than the set value, the transceiver device 160a can be configured to determine that there is the blockage between the wireless media device 300 and the display device 50 and perform the beam change through the beam tracking.

. For example, the transceiver device 160a can use the first beam BM1 before the blockage determination time point PKa as illustrated in FIG. 14A and change the first beam BM1 to the second beam BM2 after the blockage determination time point PKa.

. That is, in response to the difference between the result of the first filtering and the result of the second filtering being equal to or greater than the set value, the transceiver device 160a can be configured to change a line of sight (LOS) beam to a beam in an upward direction of the LOS beam through the beam tracking.

. Meanwhile, in response to the difference between the result of the first filtering and the result of the second filtering being equal to or greater than the set value, the transceiver device 160a can be configured to determine that the blockage occurs, and in response to a result level of the second filtering being increased stepwise and the difference between the result of the first filtering and the result of the second filtering being changed to be less than the set value after determining that the blockage occurs, the transceiver device 160a can be configured to determine that the blockage is cancelled.

. In FIG. 15B, it is illustrated that from the PKa time point to the PKb time point, the result of the first filtering is less than the result of the second filtering, and from the PKb time point to the PKd time point, the result of the first filtering is greater than the result of the second filtering.

. Further, in FIG. 15B, a result level of the second filtering is increased from the PKc time point, and increased to PKd stepwise.

. Referring to the GRb graph, the result of the filtering by the first filter 1505 shows a difference from the instantaneous value of the link quality from the PKb time point, but is almost similar to the instantaneous value from the PKc time point.

. The blockage cancellation occurs at an actual PKc time point, but the blockage can occur after the PKc time point, so the transceiver device 160a according to the embodiment of the present disclosure performs blockage cancellation determination based on whether the result level of the second filtering being increased stepwise.

. That is, the transceiver device 160a can be configured to determine that the blockage is cancelled at the PKd time point in response to the difference between the result of the first filtering and the result of the second filtering being changed to be less than the set value while the result level of the second filtering is increased stepwise after the blockage determination time point PKa.

. Accordingly, the transceiver device 160a can be configured to perform the beam change from the first beam BM1 to the second beam BM2 through the beam tracking in a Tad period between the blockage determination time point PKa and the blockage cancellation determination time point PKd, and use the first beam BM1 before the beam change again after the blockage cancellation determination time point PKd. Accordingly, the stable media data transmission based on blockage detection cancellation is enabled.

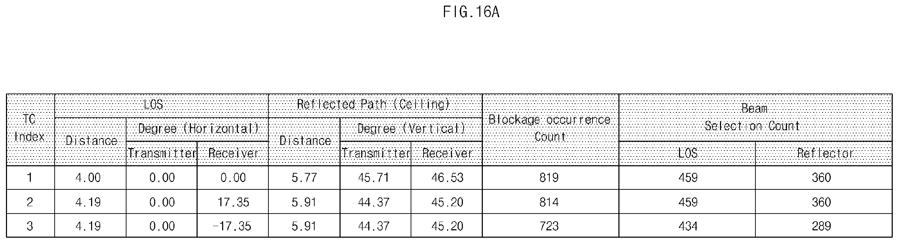

. FIG. 16A is a diagram illustrating performance evaluation in the case of performing the beam tracking by a request.

. Referring to FIG. 16A, a transmitter is set as the wireless media device 300, the receiver is set as the display device 50, LOS distances, which are linear distances between the wireless media device 30 and the display device 50, are set as 4 m, 4.19 m, and 4.19 m respectively, and distances including the ceiling reflection paths corresponding thereto are set as 5.77 **m,** 5.91 **m,** and 5.91 m to perform an experiment on the blockage.

. In FIG. 16A, it can be seen that, in a case where the blockages between the wireless media device 300 and the display device 50 have progressed 819 times, 814 times, and 723 times, respectively, a case where the first beam BM1 which is the LOS beam is set as it is in response to the request of the wireless media device 200 or the display device 50 occurs 459 times, 459 times, and 434 times, for the blockages, respectively.

. Meanwhile, in FIG. 16A, it can be seen that, in a case where the blockages between the wireless media device 300 and the display device 50 has progressed 819 times, 814 times, and 723 times, respectively, a case where the beam is changed to the second beam BM2 other than the first beam BM1 in response to the request of the wireless media device 200 or the display device 50 occurs 360 times, 360 times, and 289 times, respectively.

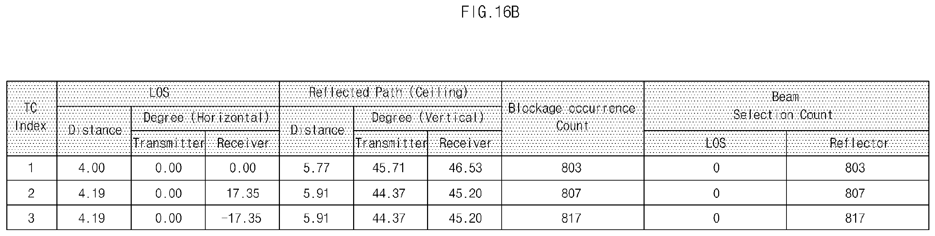

. FIG. 16B is a diagram illustrating performance evaluation in a case of performing the beam tracking, based on a periodic link quality.

. Referring to FIG. 16B, the transmitter is set as the wireless media device 300, the receiver is set as the display device 50, the LOS distances, which are linear distances between the wireless media device 30 and the display device 50 are set as **4 m,** 4.19 **m,** and 4.19 m respectively, and the distances including the ceiling reflection paths corresponding thereto are set as 5.77 **m,** 5.91 **m,** and 5.91 m to perform the experiment on the blockage.

. In FIG. 16B, it can be seen that, in a case where the blockages between the wireless media device 300 and the display device 50 has progressed 803 times, 807 times, and 817 times, respectively, a case where the first beam BM1 which is the LOS beam is set as it is in response to the request of the wireless media device 200 or the display device 50 occurs 0 time, 0 time, and 0 time, respectively by performing the beam tracking based on the periodic link quality.

. In FIG. 16B, it can be seen that, in a case where the blockages between the wireless media device 300 and the display device 50 has progressed 803 times, 807 times, and 817 times, respectively, a case where the beam is changed to the second beam BM2 other than the first beam BM1 which is the LOS beam by performing the beam tracking based on the periodic link quality occurs 0 time, 0 time, and 0 time, respectively by performing the beam tracking based on the periodic link quality.

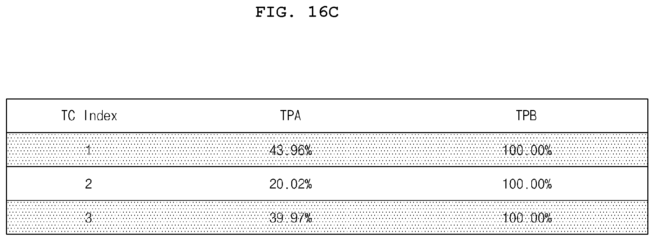

. FIG. 16C is a diagram comparing a TPA that is a result of FIG. 16A with a TPB that is a result in FIG. 16B.

. Referring to FIG. 16C, it can be seen that when the beam tracking is performed at the request of the wireless media device 300 or the display device 50 in FIG. 16A, the results are as low as 43.96%, 20.02%, and 39.97% which are 360/819, 360/814, and 289/723, respectively.

. Meanwhile, it can be seen that when the beam tracking is performed based on the periodic link quality of FIG. 16B, the results of 100%, 100%, and 100% are obtained as 803/803, 807/807, and 817/817, respectively.

. Accordingly, based on a link quality between the wireless media device 200 and the display device 50, each of a first filtering to react at a first speed and a second filtering to react at a second speed slower than the first speed is performed, and based on a difference between a difference between a result of the first filtering and a result of the second filtering, beam tracking is performed to enable rapid and stable media data transmission.

. While the embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Industrial Applicability

. The present disclosure is applicable to an image display apparatus capable of rapidly performing beam tracking based on blockage detection.

## Claims

1. A wireless media device comprising:

   a signal processing device configured to process an image signal or an audio signal; and
   a transceiver device configured to wirelessly transmit a signal from the signal processing device to an external display device,
   wherein the transceiver device is configured to perform, based on a link quality between the wireless media device and the display device, each of a first filtering to react at a first speed and a second filtering to react at a second speed slower than the first speed, and perform beam tracking based on a difference between a result of the first filtering and a result of the second filtering.

2. The wireless media device of claim 1, wherein the transceiver device is configured to perform the beam tracking in response to the difference between the result of the first filtering and the result of the second filtering being equal to or greater than a set value.

3. The wireless media device of claim 1, wherein the transceiver device is configured to:

   select a beam candidate group based on the link quality between the wireless media device and the display device, and manage the beam candidate group, and
   perform the beam tracking in response to the difference between the result of the first filtering and the result of the second filtering being equal to or greater than the set value.

4. The wireless media device of claim 1, wherein in response to the difference between the result of the first filtering and the result of the second filtering being equal to or greater than the set value, the transceiver device is configured to determine that there is a blockage between the wireless media device and the display device and perform a beam change through the beam tracking.

5. The wireless media device of claim 1, wherein the transceiver device is configured to use a current beam as it is without performing the beam tracking in response to the difference between the result of the first filtering and the result of the second filtering being less than the set value.

6. The wireless media device of claim 1, wherein the transceiver device is configured to perform each of the first filtering based on a first coefficient and the second filtering based on a second coefficient less than the first coefficient.

7. The wireless media device of claim 1, wherein in response to the difference between the result of the first filtering and the result of the second filtering being equal to or greater than the set value, the transceiver device is configured to change a line of sight (LOS) beam to a beam in an upward direction of the LOS beam through the beam tracking.

8. The wireless media device of claim 1, wherein in response to the difference between the result of the first filtering and the result of the second filtering being equal to or greater than the set value, the transceiver device is configured to determine that the blockage occurs, and in response to a result level of the second filtering being increased stepwise and the difference between the result of the first filtering and the result of the second filtering being changed to be less than the set value after determining that there is the blockage, determine that the blockage is cancelled.

9. The wireless media device of claim 8, wherein the transceiver device is configured to perform a beam change through the beam tracking between the blockage determination time point and the blockage cancellation determination time point, and use a beam before the bema change again after the blockage cancellation determination time point.

10. The wireless media device of claim 1, wherein the transceiver device is configured to :

   transmit a first signal based on a beam having a first shape in which a sector is sequentially changed during a first period,
   receive a second signal based on the beam having the first shape from the display device during a third period based on selection of the wireless media device of the display device during a second period,
   approve association with the display device based on network address information in the second signal during a fourth period,
   transmit a third signal based on a beam having a second shape at an angle less than that of the first shape during a fifth period, and
   transmit wireless media to the display device based on the beam having the second shape during a sixth period.

11. An image display apparatus comprising:

   a display device; and
   a wireless media device of any one of claims 1 to 10.

FIG. 1

FIG.2

FIG.3

FIG. 4A

(a)                    (b)                    (c)

FIG. 4B

150

415

Coordinate
value calculator

411

412

RF module

413

IR module

200

420

421

RF module

423

IR module

470

Memory

460

Power supply

480

Controller

430

User input unit

450

451

LED module

453

Vibration module

455

Audio output
module

457

Display module

440

441

Gyro sensor

443

Acceleration
sensor

EP 4 637 043 A1

FIG.5

FIG. 6A

FIG. 6B

FIG. 7

FIG. 8

```
                    ┌─────────────┐
                    │    Start    │
                    └──────┬──────┘
                           │
                           ▼
        ┌──────────────────────────────────┐
        │               Scan               │───S910
        └──────────────────┬───────────────┘
                           │
                           ▼
        ┌──────────────────────────────────┐
        │             BSS join             │───S920
        └──────────────────┬───────────────┘
                           │
                           ▼
        ┌──────────────────────────────────┐
        │             Init SLS             │───S930
        └──────────────────┬───────────────┘
                           │
                           ▼
        ┌──────────────────────────────────┐
        │           Association            │───S940
        └──────────────────┬───────────────┘
                           │
                           ▼
        ┌──────────────────────────────────┐
        │        MIMO Beam forming         │───S950
        └──────────────────┬───────────────┘
                           │
                           ▼
        ┌──────────────────────────────────┐
        │    Data transfer(AV service)     │───S960
        └──────────────────┬───────────────┘
                           │
                           ▼
                    ┌─────────────┐
                    │     End     │
                    └─────────────┘
```

FIG. 9

FIG.10A

| AGC Field | | | | | | | | | . . . | TRN Unit$_0$ | | | | | TRN Unit$_1$ | | | | | . . . |

| AGC$_1$ | AGC$_2$ | AGC$_3$ | AGC$_4$ | AGC$_5$ | AGC$_6$ | AGC$_7$ | AGC$_8$ | . . . | CE | TRN$_1$ | TRN$_2$ | TRN$_3$ | TRN$_4$ | CE | TRN$_5$ | TRN$_6$ | TRN$_7$ | TRN$_8$ | . . . |

FIG. 10B

AGC$_n$(Control Mode)

| Gb$_{64}$ | Gb$_{64}$ | Gb$_{64}$ | Gb$_{64}$ | Gb$_{64}$ |

(a)

AGC$_n$(SC Mode)

| Gb$_{64}$ | Gb$_{64}$ | Gb$_{64}$ | Gb$_{64}$ | Gb$_{64}$ |

(b)

FIG. 10C

| Ga$_{128}$ | $-$Gb$_{128}$ | Ga$_{128}$ | Gb$_{128}$ | Ga$_{128}$ |

FIG. 11B

| $Ga_N$ | $-Gb_N$ | $Ga_N$ | $Gb_N$ | $Ga_N$ | $-Gb_N$ |
|--------|---------|--------|--------|--------|---------|

FIG.11C

FIG. 11D

FIG.11E

FIG. 12A

FIG. 12B

FIG. 12C

| Beamforming item | | Support mandatory | Notes |
|---|---|---|---|
| SLS phase (10.38.2, 10.38.6.2) | | Yes | A DMG STA is capable to participate in an SLS with any other STA as described in 10.38.2 and 10.38.6.2 |
| Beamforming in BTI (10.38.4) | | Yes | When operating as an AP or PCP, a DMG STA is capable to perform beamforming in the BTI as described in 10.38.4 |
| Beamforming in A-BEF (10.38.5) | | Yes | When operating as an AP or PCP, a DMG STA is capable to perform beamforming in the A-BFT as described in 10.38.5 |
| BRP setup subphase (10.38.3.2) | | Yes | A DMG STA is capable to negotiate BRP settings with any other STA as described in 10.38.3.2 |
| MIDC subphase (10.38.6.3) | MID subphase | No | A DMG STA does not have to be capable to perform MID as described in 10.38.6.3 |
| | BC subphase | No | A DMG STA does not have to be capable to perform BC as described in 10.38.6.3 |
| BRP phase (10.38.3, 10.38.6.4) | Feedback= BS-FBCK | Yes | A DMG STA is capable to perform the BRP with any other STA as described in 10.38.3 and 10.38.6.4 and is capable to return the BS-FBCK |
| | Feedback= Channel measurement | No | A DMG STA is capable to perform the BRP with any other STA as described in 10.38.3 and 10.38.6.4, but does not have to be capable to return channel measurements |
| Beam tracking (10.38.7) | Feedback= BS-FBCK | Yes | A DMG STA is capable of responding to a receive beam tracking request. A DMG STA is capable of responding to a transmit beam tracking request with the BS-FBCK. |
| | Feedback= Channel measurement | No | A DMG STA is capable of responding to a receive beam tracking request. A DMG STA does not have to be capable of responding to a transmit beam tracking request with channel measurements. |

FIG. 13

```
                        ┌──────────┐
                        │  Start   │
                        └────┬─────┘
                             │
                             ▼
              ┌────────────────────────────┐
              │ Perform first filtering     │───S1410
              │ based on link quality       │
              └──────────────┬─────────────┘
                             │
                             ▼
              ┌────────────────────────────┐
              │ Perform second filtering    │───S1415
              │ based on link quality       │
              └──────────────┬─────────────┘
                             │
                             ▼         S1420
                      ╱────────────────╲
                     ╱ Is difference    ╲
                    ╱ between first      ╲  No
                    ╲ filtering and       ╱─────────────┐
                     ╲ second filtering  ╱              │
                      ╲equal to or larger╱              │
                       ╲than threshold? ╱               │
                        ╲──────┬───────╱                │
                          Yes  │                        ▼
                               ▼              ┌────────────────────┐
              ┌────────────────────────────┐  │ Use current beam   │───S1425
              │ Determine that blockage     │  └─────────┬──────────┘
              │ occurs          │───S1430              │
              └──────────────┬─────────────┘             │
                             │                           │
                             ▼                           │
              ┌────────────────────────────┐             │
              │ Abandon current beam        │───S1435     │
              └──────────────┬─────────────┘             │
                             │                           │
                             ▼                           │
              ┌────────────────────────────┐             │
              │ Perform beam tracking       │───S1440     │
              └──────────────┬─────────────┘             │
                             │                           │
                             ▼                           │
              ┌────────────────────────────┐             │
              │ Use selected beam           │───S1445     │
              └──────────────┬─────────────┘             │
                             │                           │
                             ▼◄──────────────────────────┘
                        ┌──────────┐
                        │   End    │
                        └──────────┘
```

FIG. 14A

100

50

T = T1

BM2

BM1

300

BM3

OBJ

FIG. 14B

100

50

T = T2

OBJ

BM2

BM1

300

BM3

FIG. 15A

1505

1510

X → Shot Term IIR Filtering → $Y^{(i)}$ → Blockage Prediction → RS

1507

Long Term IIR Filtering → $Y^{(i)}$

F I G. 15B

FIG.16A

| TC Index | LOS | | | Reflected Path (Ceiling) | | | Blockage occurrence Count | Beam Selection Count | |
|---|---|---|---|---|---|---|---|---|---|
| | Distance | Degree (Horizontal) | | Distance | Degree (Vertical) | | | | |
| | | Transmitter | Receiver | | Transmitter | Receiver | | LOS | Reflector |
| 1 | 4.00 | 0.00 | 0.00 | 5.77 | 45.71 | 46.53 | 819 | 459 | 360 |
| 2 | 4.19 | 0.00 | 17.35 | 5.91 | 44.37 | 45.20 | 814 | 459 | 360 |
| 3 | 4.19 | 0.00 | -17.35 | 5.91 | 44.37 | 45.20 | 723 | 434 | 289 |

FIG.16B

| TC Index | LOS | | | Reflected Path (Ceiling) | | | Blockage occurrence Count | Beam Selection Count | |
|---|---|---|---|---|---|---|---|---|---|
| | Distance | Degree (Horizontal) | | Distance | Degree (Vertical) | | | LOS | Reflector |
| | | Transmitter | Receiver | | Transmitter | Receiver | | | |
| 1 | 4.00 | 0.00 | 0.00 | 5.77 | 45.71 | 46.53 | 803 | 0 | 803 |
| 2 | 4.19 | 0.00 | 17.35 | 5.91 | 44.37 | 45.20 | 807 | 0 | 807 |
| 3 | 4.19 | 0.00 | −17.35 | 5.91 | 44.37 | 45.20 | 817 | 0 | 817 |

EP 4 637 043 A1

FIG. 16C

| TC Index | TPA | TPB |
|----------|--------|---------|
| 1 | 43.96% | 100.00% |
| 2 | 20.02% | 100.00% |
| 3 | 39.97% | 100.00% |

## INTERNATIONAL SEARCH REPORT

| International application No. |
|---|
| **PCT/KR2023/016476** |

### A. CLASSIFICATION OF SUBJECT MATTER

**H04B 7/06**(2006.01)i; **H04B 7/08**(2006.01)i; **H04B 7/0408**(2017.01)i; **H04W 24/10**(2009.01)i; **H04N 21/436**(2011.01)i; **H04N 21/4363**(2011.01)i; **H04W 84/12**(2009.01)i; **H04W 16/28**(2009.01)i

According to International Patent Classification (IPC) or to both national classification and IPC

### B. FIELDS SEARCHED

Minimum documentation searched (classification system followed by classification symbols)

H04B 7/06(2006.01); G01S 15/89(2006.01); G01S 7/52(2006.01); H04R 1/40(2006.01); H04R 25/00(2006.01); H04R 3/00(2006.01); H04W 24/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 링크 퀄리티(link quality), 필터링(filtering), 빔 트래킹(beam tracking), 디스플레이 (display)

### C. DOCUMENTS CONSIDERED TO BE RELEVANT

| Category* | Citation of document, with indication, where appropriate, of the relevant passages | Relevant to claim No. |
|---|---|---|
| Y | WO 2022-165007 A1 (SHURE ACQUISITION HOLDINGS, INC.) 04 August 2022 (2022-08-04)<br>See paragraphs [0023], [0031], [0035]-[0037] and [0040]; and figures 1-3. | 1-3,6,11 |
| A | | 4-5,7-10 |
| Y | US 11249188 B2 (KONINKLIJKE PHILIPS N.V.) 15 February 2022 (2022-02-15)<br>See column 4, lines 29-30; column 5, lines 61-64 and column 6, lines 10-15; and figures 1-3. | 1-3,6,11 |
| A | US 10419849 B2 (FRAUNHOFER-GESELLSCHAFT ZUR FOERDERUNG DER ANGEWANDTEN FORSCHUNG E.V.) 17 September 2019 (2019-09-17)<br>See column 8, line 39 - column 10, line 12; claim 1; and figure 3. | 1-11 |
| A | US 2012-0064916 A1 (WOODSUM, Harvey C.) 15 March 2012 (2012-03-15)<br>See paragraphs [0019]-[0024]; claim 1; and figure 1. | 1-11 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 February 2024** | **15 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/016476**

| C. | DOCUMENTS CONSIDERED TO BE RELEVANT | |
|---|---|---|
| Category* | Citation of document, with indication, where appropriate, of the relevant passages | Relevant to claim No. |
| A | US 9241223 B2 (MALASPINA LABS (BARBADOS), INC.) 19 January 2016 (2016-01-19)<br>See column 6, line 23 - column 7, line 21; claim 1; and figure 2. | 1-11 |

Form PCT/ISA/210 (second sheet) (July 2022)

EP 4 637 043 A1

## INTERNATIONAL SEARCH REPORT
### Information on patent family members

International application No.

**PCT/KR2023/016476**

| Patent document cited in search report | | | Publication date (day/month/year) | Patent family member(s) | | | Publication date (day/month/year) |
|---|---|---|---|---|---|---|---|
| WO | 2022-165007 | A1 | 04 August 2022 | CN | 116918351 | A | 20 October 2023 |
| | | | | EP | 4285605 | A1 | 06 December 2023 |
| | | | | US | 11785380 | B2 | 10 October 2023 |
| | | | | US | 2022-0240008 | A1 | 28 July 2022 |
| US | 11249188 | B2 | 15 February 2022 | CN | 108474844 | A | 31 August 2018 |
| | | | | CN | 108474844 | B | 14 July 2023 |
| | | | | EP | 3397987 | A1 | 07 November 2018 |
| | | | | EP | 3397987 | B1 | 20 December 2023 |
| | | | | JP | 2019-500148 | A | 10 January 2019 |
| | | | | JP | 6873141 | B2 | 19 May 2021 |
| | | | | US | 2019-0094357 | A1 | 28 March 2019 |
| | | | | US | 2022-0137211 | A1 | 05 May 2022 |
| | | | | WO | 2017-114872 | A1 | 06 July 2017 |
| US | 10419849 | B2 | 17 September 2019 | CN | 107223345 | A | 29 September 2017 |
| | | | | CN | 107223345 | B | 07 April 2020 |
| | | | | DE | 102015203600 | A1 | 25 February 2016 |
| | | | | DE | 102015203600 | B4 | 21 October 2021 |
| | | | | EP | 3183891 | A1 | 28 June 2017 |
| | | | | EP | 3183891 | B1 | 31 October 2018 |
| | | | | JP | 2017-531971 | A | 26 October 2017 |
| | | | | JP | 6427672 | B2 | 21 November 2018 |
| | | | | KR | 10-2009274 | B1 | 09 August 2019 |
| | | | | KR | 10-2017-0044180 | A | 24 April 2017 |
| | | | | US | 2017-0164100 | A1 | 08 June 2017 |
| | | | | WO | 2016-026970 | A1 | 25 February 2016 |
| US | 2012-0064916 | A1 | 15 March 2012 | US | 2009-0239551 | A1 | 24 September 2009 |
| | | | | US | 2014-0044208 | A1 | 13 February 2014 |
| | | | | US | 2016-0105231 | A1 | 14 April 2016 |
| | | | | US | 2016-0261330 | A1 | 08 September 2016 |
| | | | | US | 8064408 | B2 | 22 November 2011 |
| | | | | US | 8559456 | B2 | 15 October 2013 |
| | | | | US | 9154214 | B2 | 06 October 2015 |
| | | | | US | 9344181 | B2 | 17 May 2016 |
| | | | | US | 9800316 | B2 | 24 October 2017 |
| | | | | WO | 2009-105418 | A1 | 27 August 2009 |
| US | 9241223 | B2 | 19 January 2016 | EP | 2903300 | A1 | 05 August 2015 |
| | | | | US | 2015-0222996 | A1 | 06 August 2015 |

Form PCT/ISA/210 (patent family annex) (July 2022)